# EUROPÄISCHE PATENTSCHRIFT

(11) **EP 3 349 562 B1**
(45) Veröffentlichungstag und Bekanntmachung des Hinweises auf die Patenterteilung: **08.04.2020**
(21) Anmeldenummer: 16778990.8
(22) Anmeldetag: 16.09.2016
(51) Int. Cl.: A01C 17/00

(54) **VERTEILMASCHINE MIT WENIGSTENS ZWEI VERTEILERSCHEIBEN MIT VARIABLER DREHZAHL**
DISTRIBUTION MACHINE WITH AT LEAST TWO SPREADER DISCS WITH VARIABLE ROTATIONAL SPEED
MACHINE DE DISTRIBUTION AVEC AU MOINS DEUX DISQUES D'ÉPANDAGE AVEC VITESSE DE ROTATION VARIABLE

(30) Priorität: 18.09.2015 DE 102015011949
(43) Veröffentlichungstag der Anmeldung: 25.07.2018
(73) Patentinhaber: RAUCH Landmaschinenfabrik GmbH, 76547 Sinzheim (DE)
(72) Erfinder: ZEITVOGEL, Thomas, 77836 Rheinmünster (DE); STÖCKLIN, Volker, 77975 Ringsheim (DE)
(74) Vertreter: Lichti - Patentanwälte Partnerschaft mbB
(86) Internationale Anmeldenummer: PCT/EP2016/001562
(87) Internationale Veröffentlichungsnummer: WO 2017/045763

(56) Entgegenhaltungen:
- EP-B1- 1 825 739
- DE-A1- 19 856 525
- DE-A1- 19 929 356
- DE-A1-102009 025 743

## Beschreibung

Die Erfindung betrifft eine Verteilmaschine mit wenigstens zwei Verteilerscheiben, welche von einem an eine Zapfwelle einer Zugmaschine oder eines Traktors anschließbaren Antriebsstrang drehangetrieben sind, wobei der Antriebsstrang eine zentrale Eingangswelle umfasst, welche über ein zentrales Getriebe wenigstens eine, zum Antrieb einer jeweiligen Verteilerscheibe dienende Querwelle antreibt, wobei wenigstens eine der Verteilerscheiben mittels eines stromab des zentralen Getriebes angeordneten Untersetzungsgetriebes mit variabler Abtriebsdrehzahl mit einer gegenüber einer anderen der Verteilerscheiben verschiedenen Drehzahl rotierbar ist, wobei das Untersetzungsgetriebe zur Veränderung seiner Abtriebsdrehzahl ein Stellglied aufweist und als mechanisches Koaxialgetriebe ausgebildet ist, dessen Eingangswelle mit der Querwelle verbunden ist und dessen Abtriebswelle koaxial zu der Querwelle angeordnet ist. Verteilmaschinen der vorgenannten Art finden insbesondere in Form von sogenannten Schleuder- oder Zweischeibenstreuern in der Landwirtschaft zum Verteilen von körnigen Düngemitteln verbreiteten Einsatz. Weitere Einsatzgebiete stellen der Winterdienst und der Straßenbau zum Verteilen von Splitt, Streusalz oder anderen, pulver- bis granulatförmigen Streugütern dar. Während den Verteilerscheiben grundsätzlich ein eigener, beispielsweise hydraulischer oder elektrischer, Antrieb zugeordnet sein kann, sind sie im Hinblick auf einen einfachen und kostengünstigen Aufbau der Verteilmaschine auch häufig an je einer Tragwelle eines - selbst antriebslosen - Antriebsstrangs festgelegt, wobei der Antriebsstrang über eine an seinem den Tragwellen der Verteilerscheiben abgewandten Ende befindliche, zentrale Eingangswelle an die Zapfwelle einer Zugmaschine oder eines Traktors angeschlossen werden kann, um die Verteilerscheiben in - üblicherweise gegensinnige - Rotation zu versetzen. Der Antriebsstrang umfasst zu diesem Zweck in der Regel ein zentrales Getriebe, z.B. ein mit Kegelrädern versehenes Eck- bzw. Winkelgetriebe, über welches die zentrale Eingangswelle mit der Querwelle in Drehverbindung steht. Die Querwelle steht wiederum über je ein Eck- bzw. Winkelgetriebe mit einer jeweiligen Tragwelle einer jeweiligen Verteilerscheibe in Drehverbindung.

Solche mechanischen Antriebe der Verteilerscheiben durch die Zapfwelle der Zugmaschine bzw. des Traktors haben sich seit Jahrzehnten in der Praxis bewährt und zeichnen sich gegenüber konstruktiv aufwändigeren, wenngleich komfortableren Hydraulik- oder Elektroantrieben durch geringere Gestehungskosten sowie eine sehr große Robustheit ohne nennenswerten Wartungsaufwand aus. Der Nachteil von derartigen, selbst antriebslosen und rein mechanisch mittels der Zapfwelle angetriebenen Verteilmaschinen liegt indes vornehmlich in der fehlenden oder unzulänglichen Anpassungsfähigkeit an verschiedene Betriebsbedingungen, wie beispielsweise die Abdeckung großer Arbeitsbreiten, die Einstellbarkeit auf unterschiedliche kleinere Arbeitsbreiten sowie die unzulängliche Anpassung an verschiedene Streugutsorten und Verteilarten, wie ein Normal-, Rand- oder Grenzstreuen oder auch für Teilbreitenschaltungen, wie zum Austreuen von Feldkeilen und dergleichen. Eine solche Anpassung ist lediglich durch auswechselbare Verteilerscheiben, auswechselbare oder in Länge und/oder Stellung veränderbare Wurfschaufeln oder auch durch Neigen des gesamten Streuaggregates möglich. Die genannten Maßnahmen stellen jedoch für den Bediener einen hohen Arbeitsaufwand dar und erfordern zudem eine entsprechende Sorgfalt. Dabei steht immer die Forderung im Vordergrund, eine gleichmäßige Streudichte bei jeder Einstellung zu gewährleisten.

Beim Normalstreuen wird in der Landwirtschaft eine gleichmäßige Streudichte durch Überlappen der Streubilder beim Befahren benachbarter Fahrgassen erreicht. Hierbei sind flachflankige Streubilder, welche insbesondere bei den heute erwünschten großen Arbeitsbreiten gegeben sind, besonders geeignet zur Erzielung einer gleichmäßigen Streudichte durch Überlappen. Sie führen aber an der Feldgrenze, wo nur einseitig gestreut wird und folglich ein Überlappen nicht stattfindet, zu einer Unterversorgung, wenn nur bis zur Feldgrenze gestreut wird, oder aber zum Überstreuen der Grenze über den Feldrand hinaus und damit zu entsprechenden Düngemittelverlusten. In vielen Fällen muss das Überstreuen dringend vermieden werden, wenn beispielsweise die Saat oder Frucht auf dem Nachbarfeld keine oder eine andere Nährstoffversorgung benötigt oder aber entlang der Grenze ein Gewässer oder eine Straße verläuft.

Um beim Grenzstreuen eine gleichmäßige Streudichte zu gewährleisten und ein Überstreuen der Grenze zu vermeiden, muss auf der Grenzseite des Zweischeibenstreuers für ein steilflankiges Streubild gesorgt werden, während zur Feldmitte hin das übliche flache Streubild beibehalten werden muss. Um diese Grenzstreuaufgabe zu lösen, werden entweder spezielle Grenzstreuscheiben eingewechselt oder aber die Wurfschaufeln auf der der Grenze zugewandten Verteilerscheibe ausgewechselt oder verstellt. Bei mehreren Arbeitsbreitenbereichen müssen für das Grenzstreuen sogar mehrere Grenzstreuscheiben zur Verfügung stehen bzw. die Wurfschaufein unterschiedlich eingestellt werden. Zusätzlich kann der Aufgabepunkt verändert werden, wie dies beispielsweise aus der EP 0 410 312 A1 bekannt ist. Diese Lösungen haben sämtlich den Nachteil, dass eine Unterbrechung des Streubetriebs notwendig ist und der Landwirt den Traktor verlassen muss, um die entsprechende Einstellung vorzunehmen. In vielen Fällen unterbleibt diese Einstellung wegen des Zeit- und Arbeitsaufwandes mit dem Ergebnis der Unterversorgung des Grenzstreifens oder des Überstreuens.

Es hat deshalb nicht an Versuchen gefehlt, die Einstellung für das Grenzstreuen von der Zugmaschine bzw. von dem Traktor aus fernbedienbar zu gestalten. Dies geschieht beispielsweise durch nur einseitige Veränderung des Aufgabepunktes und/oder durch Kippen des Streuaggregates an der Dreipunktaufnahme des Traktors. Diese Methoden sind jedoch außerordentlich ungenau und insbesondere nicht variabel genug.

Darüber hinaus ist es insbesondere bekannt, drehzahlregelbare Getriebe in dem Antriebsstrang der Verteilerscheiben vorzusehen, so dass letztere mit unterschiedlichen Drehzahlen angetrieben werden können. Auf diese Weise soll nicht nur eine Variation der Arbeitsbreite, sondern auch eine einseitige Änderung der Streubreite, wie z.B. für das Grenzstreuen, möglich sein. Bekannte drehzahlveränderliche Getriebe für diesen Zweck sind jedoch sehr aufwändig und teuer und stehen deshalb hinsichtlich der Gestehungskosten hydraulischen Einzelantrieben praktisch gleich (EP 0 330 839 A1), mit deren Hilfe zwar die Grenzstreuaufgabe komfortabel gelöst werden kann, die jedoch für viele landwirtschaftlichen Betriebe zu teuer und in der Regel auch funktionsanfälliger sind.

Der DE 36 17 302 A1 ist eine nach Art eines Schleuderstreuers ausgebildete Verteilmaschine mit mehreren Verteilerscheiben zu entnehmen, für deren jede ein eigenes, hinsichtlich der Drehzahl veränderbares Getriebe vorgesehen ist. Die Druckschrift zeigt hierzu Ausgestaltungen mit insgesamt vier, jeweils zwei beidseitig der Eingangswelle angeordneten Verteilerscheiben. Die äußeren Verteilerscheiben können dabei über ein eigenes Getriebe, wie einen Keilriemenantrieb, von den Wellen der inneren Schleuderscheiben angetrieben und in Rotation versetzt werden, so dass sie gegenüber diesen eine veränderte Drehzahl aufweisen können. Auch dies ist aufwändig und kostenintensiv, zumal die Getriebe paarweise vorgesehen sind.

Aus der EP 1 782 670 A1 ist ein weiteres, für landwirtschaftliche Geräte, insbesondere Düngerstreuer, vorgesehenes Getriebe bekannt, welches zwischen der zum Antrieb der Verteilerscheiben vorgesehenen Querwelle und der zentralen Eingangswelle angeordnet ist und somit das dort ansonsten übliche Eck- bzw. Winkelgetriebe ersetzt. Um die Verteilerscheiben entweder mit derselben oder mit unterschiedlicher Drehzahl in Drehung zu versetzen, ist das Getriebe als sogenanntes Lastschaltgetriebe ausgestaltet, bei welchem während einer Drehzahländerung beim Schalten zwischen verschiedenen Übersetzungsverhältnissen das Antriebsdrehmoment fortwährend auf die Abtriebswelle einwirkt. Die zentrale Eingangswelle steht zu diesem Zweck über verschiedene Zahnräder mit einer parallel zu den - rechten und linken - Querwellen angeordneten Übertragungswelle in Drehverbindung, welche mittels dreier hierauf sitzender Stirnräder wahlweise mit einem von drei Stirnrädern in Eingriff gebracht werden können, welche auf einer Schaltwelle sitzen, die koaxial zu den beiden Querwellen und zwischen diesen gelagert ist. Um die Querwellen mit denselben oder unterschiedlichen Drehzahlen anzutreiben, wird eines der Stirnräder der Übertragungswelle mit einem der Stirnräder der schaltwelle in Eingriff gebracht, wobei sich je nach Zahnradkombination unterschiedliche Übersetzungsverhältnisse ergeben. Zur Überlastsicherung können Zwischen der Schaltwelle und den beiden Querwellen ferner kraftschlüssig miteinander in Verbindung stehende Lamellenpakete vorgesehen sein. Davon abgesehen, dass der Aufbau des bekannten Getriebes sehr aufwändig und somit teuer ist, ist eine stufenlose Drehzahländerung zumindest einer der beiden Verteilerscheiben nicht möglich und benötigt das Getriebe sehr viel Bauraum, wie er bei gattungsgemäßen Verteilmaschinen nur bedingt zur Verfügung steht.

Die DE 199 29 356 C2 beschreibt eine gattungsgemäße Verteilmaschine in Form eines Zweischeibenstreuers, bei welchem eine der beiden Verteilerscheiben mittels eines stromab des zentralen Getriebes - also an der der zentralen Eingangswelle abgewandten Seite desselben - angeordneten Untersetzungsgetriebes mit variabler Abtriebsdrehzahl mit einer gegenüber der anderen der beiden Verteilerscheiben verschiedenen Drehzahl rotierbar ist. Die in dieser Druckschrift vorgeschlagenen Lösungen haben jedoch aufgrund technischer Probleme bislang nicht zur Serienreife gefunden. So haben sich einerseits insbesondere die mit Hydromotoren versehenen hydraulischen Getriebe als funktions- und wartungsanfällig erwiesen. Andererseits haben sich auch die mechanischen Getriebe als wenig praxisgeeignet gezeigt, wobei die hierfür verwendeten Riementriebe verschleißanfällig sind und zudem einen hohen Raumbedarf besitzen, welcher einen Umbau des gesamten Antriebsstrangs der Verteilerscheiben erfordert. Sofern das die Tragwelle der Verteilerscheibe mit der Querwelle verbindende Eck- bzw. Winkelgetriebe von einem Reibradgetriebe gebildet ist, bei welchem die einander anliegenden Reibräder aktuatorisch in unterschiedliche Radialpositionen relativ zueinander verlagert werden können, erweist sich die hierdurch bewirkte Drehzahlveränderung als nur relativ gering und hat sich gleichfalls ein hoher Verschleiß mit einer dadurch bedingten Wartungsanfälligkeit herausgestellt.

Die EP 1 825 739 B1 beschreibt ein zur einseitigen Veränderung der Scheibendrehzahl eines Düngerstreuers vorgesehenes Untersetzungsgetriebe, wobei jeweils ein Untersetzungsgetriebe an den beiden entgegengesetzten Enden einer Querwelle angeordnet ist, welche über ein zentrales Winkelgetriebe mit einer Eingangswelle des Antriebsstrangs der Verteilerscheiben in Verbindung steht. Beide Untersetzungsgetriebe umfassen ein Differentialgetriebe, welches mit einem Drehmomenterzeuger in Form eines Hydromotors oder einer Pumpe in Verbindung steht. Durch Überlagerung der Drehbewegungen einerseits der Querwelle, andererseits des Drehmomenterzeugers werden der koaxial zur Querwelle angeordnete Differentialkorb und eine jeweilige, zu je einer der Verteilerscheiben führende Abtriebswelle in unterschiedliche Drehzahlen versetzt, was stufenlos vonstattengehen kann. Die die Verteilerscheiben tragenden Abtriebswellen sind senkrecht zur Querwelle angeordnet. Neben dem relativ aufwändigen Aufbau erweist sich insbesondere der hohe Platzbedarf als problematisch.

Der DE 10 2009 025 743 A1 ist schließlich eine gattungsgemäße Verteilmaschine in Form eines Zweischeibenstreuers mit je einem offensichtlich in Form eines Koaxialgetriebes ausgestalteten Untersetzungsgetriebe zu entnehmen, welches jeweils zur optionalen Veränderung der Drehzahl sowohl der einen (linken) Verteilerscheibe als auch der anderen (rechten) Verteilerscheibe dient. In Bezug auf die konkrete konstruktive Ausgestaltung der als Umlaufgetriebe bezeichneten Koaxialgetriebe ist der Druckschrift jedoch lediglich zu entnehmen, dass es sich um ein Differentialgetriebe oder Planetengetriebe handeln kann.

Hiervon ausgehend, liegt der Erfindung daher die Aufgabe zugrunde, eine Verteilmaschine der eingangs genannten Art auf einfache und kostengünstige Weise dahingehend weiterzubilden, dass die Verteilerscheiben in fernbedienbarer Weise robust, dauerhaft und zuverlässig mit variablen Drehzahlen angetrieben werden können, so dass insbesondere ein Grenz- und Randstreuen sowie vorzugsweise auch ein Keilstreuen möglich ist, wobei insbesondere eine stufenlose Veränderung der Drehzahl zumindest einer der Verteilerscheiben gewährleistet sein sollte.

Erfindungsgemäß wird diese Aufgabe bei einer gattungsgemäßen Verteilmaschine dadurch gelöst, dass das Koaxialgetriebe als Reibkupplungsgetriebe ausgebildet ist, wobei das Untersetzungsverhältnis des Reibkupplungsgetriebes mittels des Stellgliedes zwischen einer Normalstellung, in welcher die Eingangsdrehzahl der Eingangswelle im Wesentlichen der Ausgangsdrehzahl der Abtriebswelle entspricht, und wenigstens einer Untersetzungsstellung, in welcher die Eingangsdrehzahl der Eingangswelle ungleich der Ausgangsdrehzahl der Abtriebswelle ist, veränderbar ist.

Die erfindungsgemäße Ausgestaltung bietet aufgrund der rein mechanischen Kraftübertragung des Drehmomentes der drehfest mit der Querwelle verbundenen Eingangswelle des Reibkupplungsgetriebes mit dessen Abtriebswelle eine hohe Robustheit und Funktionssicherheit bei nur äußerst geringem Wartungsaufwand. Aufgrund der koaxialen Anordnung der Eingangswelle des als Koaxialgetriebe ausgestalteten Reibkupplungsgetriebes mit der Abtriebswelle ist überdies nur ein sehr kleiner Bauraum erforderlich, so dass das erfindungsgemäße Reibkupplungsgetriebe problemlos in die übliche Rahmenkonstruktion gattungsgemäßer Verteilmaschinen eingebaut werden kann, ohne die Konfiguration des gesamten Antriebsstrangs der Verteilerscheiben verändern zu müssen. Das erfindungsgemäß in Form eines Reibkupplungsgetriebes ausgestaltete Koaxialgetriebe, bei welchen eine rein mechanische Drehmomentübertragung seiner Eingangswelle auf seine Abtriebswelle unter Gewährleistung einer abtriebsseitigen Drehzahlveränderung mittels des Stellgliedes sichergestellt ist, erweist sich folglich insbesondere aufgrund seiner hohen Robustheit in Verbindung mit seiner sehr kompakten Bauweise als besonders vorteilhaft.

Befindet sich das mechanische Reibkupplungsgetriebe in seiner Normalstellung, in welcher die Eingangsdrehzahl der Querwelle bzw. der hiermit drehfest verbundenen Eingangswelle des Reibkupplungsgetriebes im Wesentlichen der Ausgangsdrehzahl der Abtriebswelle entspricht, werden beide Verteilerscheiben etwa mit derselben Drehzahl angetrieben, so dass die Streubreite beider Scheiben gleich ist und die gewünschte Arbeitsbreite für das Normalstreuen verwirklicht wird. Dabei kann die Verteilmaschine selbstverständlich ferner nach einer oder mehrerer der oben beschriebenen, herkömmlichen Methoden auf verschiedene Arbeitsbreiten eingestellt werden, so dass in Verbindung mit einer üblicherweise mittels geeigneter Dosierorgane, welche das Streugut den Verteilerscheiben in einem voreinstellbaren und/oder regelbaren Massenstrom aufgeben, einstellbaren Streumenge alle für den Normalstreubetrieb notwendigen Parameter variiert werden können. Durch Überführen des als Reibkupplungsgetriebe ausgestalteten Koaxialgetriebes von einer solchen Normalstellung in wenigstens eine oder vorzugsweise mehrere Untersetzungsstellung(en) wird die Abtriebsdrehzahl des Reibkupplungsgetriebes, insbesondere in Richtung einer gegenüber der Eingangsdrehzahl geringeren Abtriebsdrehzahl, verändert, so dass sich die jeweilige, mit der Abtriebswelle in Drehverbindung stehende Verteilerscheibe mit einer entsprechend anderen, insbesondere niedrigeren, Drehzahl in Rotation versetzen lässt. Folglich lässt sich beispielsweise ein Grenz- oder Randstreuen durchführen, indem durch die verringerte Drehzahl nicht nur die Streubreite der auf dieser Seite befindlichen Verteilerscheibe reduziert, sondern zugleich deren Streufächer zur Grenze hin verlagert und dadurch ein steilflankigeres Streubild erreicht werden kann. Letzteres kann mittels einer als solche aus dem Stand der Technik bekannten Einrichtung zur Verstellung des Aufgabepunktes des Streugutes auf die Verteilerscheibe(n) - sei es radial und/oder sei es insbesondere in Umfangsrichtung der Verteilerscheibe - geschehen (vgl. beispielsweise die DE 10 2005 030 781 A1 oder DE 10 2007 053 550 A1).

An dieser Stelle sei darauf hingewiesen, dass es für viele Anwendungsfälle ausreicht, wenn die Drehzahl nur einer der Verteilerscheiben mittels des erfindungsgemäße Reibkupplungsgetriebes veränderbar ist, während die Drehzahl der andere(n) Verteilerscheibe(n) durch die Drehzahl der Zapfwelle des Traktors bzw. der Zugmaschine vorgegeben ist (zum Grenz- oder Randstreuen sollte dann beispielsweise in diejenige Richtung gefahren werden, bei welcher die drehzahlveränderliche Verteilerscheibe dem Feldrand zugewandt ist). Stattdessen ist es aber selbstverständlich auch möglich, dass beide - oder im Falle eines Schleuderstreuers mit mehr als zwei Verteilerscheiben auch alle - Verteilerscheiben mittels eines jeweiligen Reibkupplungsgetriebes drehzahlveränderlich sind, wenn beispielweise auch ein Keilstreuen von spitz zulaufenden Feldern oder eine Teilbreitenschaltung bei beliebiger Fahrtrichtung der Verteilmaschine gewünscht wird.

Mittels des zur Veränderung des Untersetzungsverhältnisses des erfindungsgemäßen Reibkupplungsgetriebes dienenden Stellgliedes lässt sich die Einstellung der gewünschten Abtriebsdrehzahl bzw. die gewünschte Drehzahl der jeweiligen Verteilerscheibe problemlos von dem Traktor bzw. von der Zugmaschine aus über eine manuelle, elektrische oder hydraulische Stelleinrichtung bewerkstelligen, wie sie weiter unten in Form eines vorzugsweise vorgesehenen Stellzylinders noch näher erläutert ist, und lässt sich - sofern gewünscht - das jeweilige Untersetzungsverhältnis auch in der Führerkabine visualisieren, so dass der Bediener bei der Streuarbeit die Führerkabine nicht verlassen und insbesondere keine Umrüstung vornehmen muss.

In vorteilhafter Ausgestaltung ist es aufgrund der kompakten und platzsparenden Bauweise des als Reibkupplungsgetriebe ausgestalteten mechanischen Koaxialgetriebes möglich, dass das Reibkupplungsgetriebe in einem die Querwelle aufnehmenden Gehäuse angeordnet oder in ein solches integriert ist, wobei das Stellglied das Gehäuse insbesondere im Wesentlichen radial durchsetzt. Das Reibkupplungsgetriebe ist folglich vor äußeren Einwirkungen, wie insbesondere Schmutz und Feuchtigkeit, geschützt und wird eine Korrosionsgefahr minimiert. Die Verstellung des Reibkupplungsgetriebes zwischen seiner Normalstellung und einer oder mehreren Untersetzungsstellungen geschieht dann von außerhalb des Gehäuses mittels des dieses durchsetzenden Stellgliedes. Mit "in das die Querwelle aufnehmende Gehäuse integriert" ist im Übrigen insbesondere eine bevorzugte Ausführungsform angesprochen, bei welcher das Getriebegehäuse des Reibkupplungsgetriebes selbst einen Teil des Gehäuses der Querwelle bildet.

Wie bereits angedeutet, kann das Reibkupplungsgetriebe vorzugsweise eine Mehrzahl an Untersetzungsstellungen mit verschiedenen Ausgangsdrehzahlen aufweisen, wobei es mittels des Stellgliedes insbesondere im Wesentlichen stufenlos zwischen den mehreren Untersetzungsstellungen verstellbar sein kann, um die gewünschte Abtriebsdrehzahl bzw. die Drehzahl der mit der Abtriebswelle, z.B. über ein herkömmliches mechanisches Eck- bzw. Winkelgetriebe, verbundenen Verteilerscheibe auf einen praktisch beliebigen Wert einstellen zu können.

Sofern das Reibkupplungsgetriebe eine Mehrzahl an Untersetzungsstellungen mit verschiedenen Abtriebsdrehzahlen aufweist, kann in vorteilhafter Ausgestaltung vorgesehen sein, dass
- abtriebseitig des Reibkupplungsgetriebes, insbesondere an dessen Abtriebswelle (oder z.B. auch an einer mit dieser drehfest verbundenen Welle einschließlich der die jeweilige Verteilerscheibe tragenden Tragwelle),
   und gegebenenfalls
- eingangsseitig des Reibkupplungsgetriebes, insbesondere an dessen Eingangswelle (oder z.B. auch an der drehfest mit der Eingangswelle verbundenen Querwelle oder an der zentralen Eingangswelle des Antriebsstrangs),
   ein Drehzahlsensor angeordnet ist, wobei der bzw. die Drehzahlsensor(en) insbesondere mit einer Steuer- und/oder Regeleinrichtung in Verbindung steht bzw. stehen, mittels welcher die Abtriebsdrehzahl gemäß einem Sollwert steuerbar und/oder regelbar ist. Während der abtriebsseitige Drehzahlsensor grundsätzlich auch lediglich zur Visualisierung der Ist-Drehzahl der Verteilerscheibe in der Führerkabine dienen kann, so dass dem Bediener angezeigt wird, ob sich das Reibkupplungsgetriebe in der Normal- oder in einer bestimmten Untersetzungsstellung befindet, woraufhin er die gewünschte Stellung durch Betätigung des Stellgliedes verändern kann, kann der bzw. können die Drehzahlsensor(en) insbesondere mit einer Steuer- und/oder Regeleinrichtung in Wirkverbindung stehen, welche ferner auch zur Steuerung bzw. Regelung anderer Streuparameter, wie der gewünschten Streumenge mittels der Dosierorgane, dem gewünschten Aufgabepunkt mittels der Einrichtung zur Verstellung des Aufgabepunktes des Streugutes auf die Verteilerscheiben etc., dienen kann, so dass die gewünschte, beispielsweise in eine Eingabeeinrichtung der Steuer- und/oder Regeleinrichtung eingebbare Abtriebsdrehzahl gemäß einem gewünschten Sollwert steuerbar und/oder regelbar ist.

Bei dem erfindungsgemäßen Reibkupplungsgetriebe kann aus den vorgenannten Gründen sowie im Hinblick auf eine zuverlässige Drehmomentübertragung in vorteilhafter Ausgestaltung vorgesehen sein, dass sowohl die Eingangswelle des Reibkupplungsgetriebes als auch dessen Abtriebswelle jeweils wenigstens eine Lamelle, insbesondere eine Mehrzahl an Lamellen, aufweist, welche sich zweckmäßigerweise in einer etwa senkrecht zur Drehachse der Eingangs- und der Abtriebswelle angeordneten Ebene, also in (einer) diesbezüglichen Radialebene(n), erstrecken und kraft- bzw. reibschlüssig miteinander in Anlage bringbar sind. Im Falle mehrerer Lamellen können diese insbesondere in Form von Lamellenpaketen ausgestaltet sein, wobei die Lamellen des Lamellenpaketes der Eingangswelle und die Lamellen des Lamellenpaketes der Abtriebswelle in Axialrichtung alternierend angeordnet sind, so dass die Lamellen des einen Lamellenpaketes der Eingangswelle zwischen die Lamellen des anderen Lamellenpaketes der Abtriebswelle eingreifen und umgekehrt.

Um die Abtriebsdrehzahl, insbesondere im Wesentlichen stufenlos, in Bezug auf die Eingangsdrehzahl verändern zu können, können die Lamellen der Eingangswelle und der Abtriebswelle vorzugsweise, insbesondere mittels eines in Axialrichtung verlagerbaren Andruckrings, mit variablem Andruck gegeneinander belastbar sein, um den zwischen der wenigstens einen Lamelle der Eingangswelle und der wenigstens einen Lamelle der Abtriebswelle während des Betriebs auftretenden Schlupf und folglich die Abtriebsdrehzahl zu verändern. Sind die Lamellen folglich mit maximalem Andruck gegeneinander belastet bzw. ist die "Kompression" der Lamellen oder der Lamellenpakete maximal, so ist der Schlupf zwischen den Lamellen der Eingangswelle und jenen der Abtriebswelle minimal und insbesondere gleich null, so dass die Drehzahl der Abtriebswelle jener der Eingangswelle entspricht. Sind die Lamellen hingegen mit minimalem oder gar keinem Andruck gegeneinander belastet bzw. ist die "Kompression" der Lamellen oder der Lamellenpakete minimal, so ist der Schlupf zwischen den Lamellen der Eingangswelle und jenen der Abtriebswelle maximal, gegebenenfalls bis hin zu einem gänzlichen Außerkontaktbringen der Lamellen voneinander, so dass die Drehzahl der Abtriebswelle kleiner, gegebenenfalls bis null, als jene der Eingangswelle ist. Es sei in diesem Zusammenhang allerdings darauf hingewiesen, dass die Lamellen selbst vorzugsweise aus im Wesentlichen starren Materialien, wie aus Metall(legierung)en, gefertigt sind und während des Betriebs bei veränderlichem Andruck aneinander somit praktisch keine Volumenänderung erfahren.

Das Stellglied des Reibkupplungsgetriebes, welches zur Veränderung des Untersetzungsverhältnisses der Abtriebswelle gegenüber der Eingangswelle dient, kann vorzugsweise ein aktuatorisches Stellglied umfassen, welches insbesondere eine hydraulische, pneumatische oder hydropneumatische Kolben-/Zylindereinheit aufweist. Folglich dient der relativ zu dem Zylinder verlagerbare Kolben der Kolben-/Zylindereinheit des aktuatorischen Stellgliedes zur Veränderung der Drehzahl der Abtriebswelle des Reibkupplungsgetriebes in Bezug auf dessen Eingangswelle, wobei eine jeweilige Relativstellung des Kolbens in Bezug auf den Zylinder für ein bestimmtes Untersetzungsverhältnis repräsentativ ist.

In diesem Zusammenhang sieht eine konstruktiv einfache und funktionssichere Ausführungsform mit Vorteil vor, dass ein Zylinder der Kolben-/Zylindereinheit des aktuatorischen Stellgliedes mit einem in einem Gehäuse des Reibkupplungsgetriebes angeordneten Ringraum in Verbindung steht, welcher sich in Axialrichtung - sei es unmittelbar oder sei es mittelbar über ein weiteres, gemeinsam mit dem Andruckring axial verlagerbares Druckelement - an den axial verlagerbaren Andruckring anschließt und zur axialen Verlagerung desselben in Abhängigkeit des in dem Ringraum herrschenden (Fluid)druckes dient. Auf diese Weise lassen sich die Lamellen der Eingangswelle und der Abtriebswelle gegeneinander belasten (sowie entlasten), indem der Andruckring mittels des von der Kolben-/Zylindereinheit erzeugten Fluiddruckes in dem Ringraum axial in Richtung der Lamellen verlagert wird, diese folglich unter Verminderung bis hin zu einer gänzlichen Vermeidung eines Schlupfes gegeneinander belastet werden (die Abtriebsdrehzahl nimmt zu), oder der Andruckring wird mittels des von der Kolben-/Zylindereinheit erzeugten - verschiedenen - Fluiddruckes in dem Ringraum axial von den Lamellen fort verlagert, so dass diese folglich unter Erhöhung eines Schlupfes entlastet werden (die Abtriebsdrehzahl nimmt ab).

In weiterhin vorteilhafter Ausgestaltung kann vorgesehen sein, dass die Lamellen der Eingangswelle und der Abtriebswelle mechanisch, insbesondere mittels Federkraft,
- gegeneinander vorbelastet sind, um sie kraftschlüssig miteinander in Anlage zu bringen; oder
- voneinander fort vorbelastet sind, um sie außer Anlage miteinander zu bringen,
   wobei die Lamellen der Eingangswelle und der Abtriebswelle mittels des Stellgliedes entgegen der mechanischen Vorbelastung
   - voneinander fort belastbar sind, um den Schlupf zu vergrößern; oder
   - gegeneinander vorbelastbar sind, um den Schlupf zu verringern.

Die mechanische Vorbelastung der Lamellen gegeneinander oder voneinander fort kann dabei insbesondere mittels Federn, beispielsweise Schraubenfedern, erfolgen, welche in Axialrichtung auf den Andruckring wirken, wobei zum Zwecke einer gleichmäßigen mechanischen Vorbelastung der Lamellen bzw. des Andruckrings um den gesamten Umfang der Eingangs- und Abtriebswelle zweckmäßigerweise mehrere, z.B. drei oder mehr, um den Umfang verteilt angeordnete Federn vorgesehen sein können. Umfasst das aktuatorische Stellglied in diesem Fall eine hydraulische, pneumatische oder hydropneumatische Kolben-/Zylindereinheit der vorgenannten Art, so kann folglich je nach Anordnung des Ringraumes in Bezug auf den Andruckring vorgesehen sein, dass
- die mechanisch gegeneinander vorbelasteten Lamellen durch Erhöhung des mittels der Kolben-/Zylindereinheit aufgebrachten Fluiddruckes entlastet werden (der Druck in dem Ringraum steigt, so dass der Andruckring axial von den Lamellen fort verlagert wird; der Schlupf zwischen den Lamellen nimmt folglich zu, so dass die Abtriebsdrehzahl sinkt); oder
- die mechanisch voneinander fort vorbelasteten Lamellen durch Erhöhung des mittels der Kolben-/Zylindereinheit aufgebrachten Fluiddruckes belastet werden (der Druck in dem Ringraum steigt, so dass der Andruckring axial auf die Lamellen zu verlagert wird; der Schlupf zwischen den Lamellen nimmt folglich ab, so dass die Abtriebsdrehzahl steigt).

Wie bereits angedeutet, kann während des Normalbetriebs insbesondere ein schlupffreier Kontakt der Eingangswelle des Reibkupplungsgetriebes mit dessen Abtriebswelle gebildet sein, so dass die Eingangsdrehzahl der Abtriebsdrehzahl entspricht. Auf diese Weise erfolgt das Normalstreuen mit gleichen Drehzahlen der Verteilerscheiben, wie es den weitaus überwiegenden Anteil der Streuarbeit ausmacht, bei einer schlupffreien und folglich mit keinerlei Reibungsverlusten behafteten Verbindung der Eingangswelle des als Reibkupplungsgetriebe ausgebildeten Koaxialgetriebes mit dessen Abtriebswelle. Ferner erfordert eine solche schlupffreie Verbindung während des Normalbetriebs keinerlei Steuerung oder Regelung der Abtriebsdrehzahl in Bezug auf die Eingangsdrehzahl.

Wie weiter oben angesprochen, sollte sich die gewünschte Abtriebsdrehzahl bzw. die gewünschte Drehzahl der jeweiligen Verteilerscheibe zweckmäßigerweise aus der Ferne, wie von dem Führerhaus eines Traktors oder mittels eines tragbaren Bedienmoduls etc., einstellen lassen. Während zu diesem Zweck grundsätzlich beliebige manuelle, elektrische oder hydraulische Stelleinrichtungen in Betracht kommen, welche zur Betätigung des Stellgliedes des Koaxialgetriebes in der Lage sind, kann hierzu in vorteilhafter Ausgestaltung vorgesehen sein, dass das aktuatorische Stellglied ferner
- einen, insbesondere hydraulischen, elektrischen oder elektromagnetischen, Stellzylinder oder einen Piezomotor umfasst, welcher mit einem Kolben der hydraulischen, pneumatischen oder hydropneumatischen Kolben-/Zylindereinheit in mechanischer Verbindung steht, um deren Kolben zu betätigen und damit den hierdurch bewirkten Fluiddruck zu verändern; oder
- eine steuer- und/oder regelbare Pumpe umfasst, welche mit einem Zylinder der hydraulischen, pneumatischen oder hydropneumatischen Kolben-/Zylindereinheit in fluidischer Verbindung steht, um deren Kolben zu betätigen und damit den hierdurch bewirkten Fluiddruck zu verändern.

Im erstgenannten Fall kann der Stellzylinder beispielsweise ein hydraulischer Stellzylinder sein, welcher z.B. von dem Hydrauliksystem der Zugmaschine bzw. des Traktors gespeist wird und ein, vorzugsweise regelbares, Drucksteuerventil umfasst, oder es kann sich insbesondere um einen elektrischen oder elektromagnetischen Stellzylinder handeln, welcher beispielsweise von der Bordelektrik der Zugmaschine bzw. des Traktors mit Strom versorgt wird. Ferner sind piezoelektrische, vorzugsweise lineare, Antriebe der Kolben-/ Zylindereinheit denkbar. Im letztgenannten Fall kann die steuer- und/oder regelbare Pumpe gleichfalls von der Bordelektrik einer Zugmaschine bzw. eines Traktors mit Strom versorgt sein; entsprechendes gilt für etwaige Drucksensoren.

Gemäß einer vorteilhaften Weiterbildung des als Reibkupplungsgetriebe ausgestalteten Koaxialgetriebes der erfindungsgemäßen Verteilmaschine kann vorgesehen sein, dass das Reibkupplungsgetriebe ferner eine Pumpe, insbesondere in Form einer Drehschieber- oder Kreiselpumpe, aufweist, deren druckseitiger Anschluss mit einem Fluidkanal in Verbindung steht, welcher an den kraftschlüssig miteinander in Anlage bringbaren Lamellen der Eingangswelle und der Abtriebswelle mündet. Auf diese Weise lassen sich die unter variablem Andruck gegeneinander belastbaren Lamellen der Eingangswelle und der Abtriebswelle nicht nur mittels geeigneter Schmierstoffe, wie Öl und dergleichen, schmieren, um insbesondere in einer Untersetzungsstellung, bei welcher zwischen den Lamellen ein bestimmter Schlupf auftritt, einen etwaigen Verschleiß zu minimieren, sondern wird insbesondere auch eine Kühlung der Lamellen in der bzw. den Untersetzungsstellung(en) sichergestellt, um die bei einem Schlupf infolge Reibung in Form von Wärme anfallende Verlustleistung abzuführen. Die Lamellen können dabei mittels der Pumpe insbesondere permanent, d.h. auch dann, wenn sich das Reibkupplungsgetriebe in seiner schlupffreien Normalstellung befindet, mit dem Schmierstoff durchströmt bzw. "gespült" sein.

Die zur Schmierung und/oder Kühlung der Lamellen dienende Pumpe kann mit Vorteil antriebslos ausgebildet sein, wobei ein Pumpenrad der Pumpe insbesondere drehfest mit der Eingangswelle verbunden ist, während das Pumpengehäuse drehfest mit einem Getriebegehäuse oder gegebenenfalls auch mit einem die Querwelle des Antriebsstrangs der Verteilerscheiben umgebenden Gehäuse verbunden sein kann. Ein eigener Antrieb der Pumpe wird auf diese Weise entbehrlich, weil er ausschließlich über den Antriebsstrang der Verteilerscheiben - oder genauer: über die Eingangswelle - erfolgt, welche(r) mittels der Zapfwelle der Zugmaschine oder des Traktors in Drehung versetzt wird.

Eine in konstruktiver Hinsicht zweckmäßige Ausgestaltung einer solchen Pumpe, wie beispielsweise in Form einer koaxialen Drehschieberpumpe, kann sich dadurch auszeichnen, dass die Pumpe auf eine Stirnseite des Reibkupplungsgetriebes, insbesondere auf dessen eingangsseitige Stirnseite, aufsetzbar ist. Dabei kann beispielsweise das Pumpengehäuse auf die Stirnseite eines Getriebegehäuses derart aufsteck-, aufrast-, aufschraubbar oder dergleichen sein, dass das Pumpenrad in eine hierfür vorgesehene Profilierung der Eingangswelle des Reibkupplungsgetriebes drehfest eingreift.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine Seitenansicht des endständigen Abschnittes eines Antriebsstrang einer in Form eines Zweischeibenstreuers ausgebildeten Verteilmaschine einschließlich deren Verteilerscheiben von hinten betrachtet in stark schematisierter Darstellung;
- Fig. 2: eine schematische Detailansicht einer Ausführungsform des Untersetzungsgetriebes mit variabler Abtriebsdrehzahl der in Fig. 1 rechten Verteilerscheibe, welches als mechanisches Koaxialgetriebe in Form eines Reibkupplungsgetriebes ausgestaltet ist und ein aktuatorisches Stellglied mit einer hydraulischen Kolben-/Zylindereinheit besitzt;
- Fig. 3: eine schematische Schnittansicht des Reibkupplungsgetriebes gemäß Fig. 2 entlang der Schnittebene III-III, wobei sich das Reibkupplungsgetriebe in seiner Stellung maximalen Schlupfes befindet, bei welcher seine Abtriebsdrehzahl (deutlich) kleiner ist als seine Eingangsdrehzahl;
- Fig. 4: eine der Fig. 3 entsprechende Schnittansicht des Reibkupplungsgetriebes, wobei es sich in seiner Stellung minimalen Schlupfes befindet, bei welcher seine Abtriebsdrehzahl der Eingangsdrehzahl entspricht;
- Fig. 5: eine schematische Schnittansicht des Reibkupplungsgetriebes gemäß Fig. 2 bis 4 entlang der Schnittebene IV-IV der Fig. 2;
- Fig. 6: eine schematische Schnittansicht des Reibkupplungsgetriebes gemäß Fig. 2 bis 5 entlang der Schnittebene V-V der Fig. 2;
- Fig. 7: eine schematische Schnittansicht des Reibkupplungsgetriebes gemäß Fig. 2 bis 6 entlang einer gegenüber der Schnittebene III-III der Fig. 2 um 90° um die Mittelachse gedrehten Schnittebene und in einer der Fig. 3 entsprechenden Stellung; und
- Fig. 8: ein vereinfachtes Schaltschema eines gegenüber der Ausführungsform gemäß Fig. 2 bis 7 abgewandelten Stellgliedes des Reibkupplungsgetriebes.

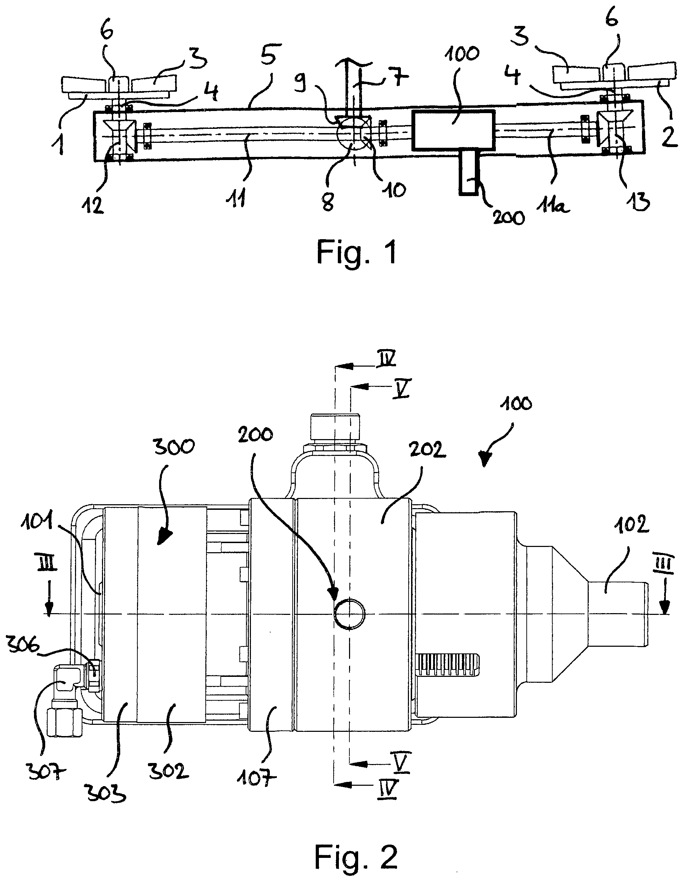

Der in Fig. 1 wiedergegebene endständige bzw. abtriebsseitige Abschnitt des Antriebsstrangs der Verteilerscheiben 1, 2 einer im Übrigen nicht näher dargestellten Verteilmaschine in Form eines Zweischeibenstreuers weist die beiden mit seitlichem Abstand voneinander angeordneten Verteilerscheiben 1, 2 auf, welche jeweils mit Wurfschaufeln 3 ausgestattet sind. Die Verteilerscheiben 1, 2 sind dabei mit gegenläufigen Drehrichtung angetrieben, wobei sie im vorliegenden Fall jeweils entgegen der Fahrtrichtung von innen nach außen umlaufen. Jede Verteilerscheibe 1, 2 sitzt drehfest und insbesondere auswechselbar auf einer etwa vertikalen Tragwelle 4, welche in einem Gehäuse 5 gelagert ist. Zur Befestigung der Wurfscheiben 4 ist eine am freien Ende einer jeden Tragwelle 4 angeordnete Nabe 6 vorgesehen.

Die Verteilerscheiben 1, 2 befinden sich unter jeweils einem Auslass (nicht gezeigt) eines gleichfalls nicht gezeigten Dosierorgans, welches wiederum unterhalb einer Auslauföffnung eines Streugutbehälters (ebenfalls nicht zeichnerisch dargestellt) angeordnet ist, welcher gemeinsam mit dem Gehäuse 5 von einem Rahmen getragen ist. Letzterer weist eine übliche Kopplungseinrichtung (nicht gezeigt) auf, mittele derer er wiederum von dem Dreipunktgestänge eines Traktors aufgenommen werden kann. Über die Auslässe der steuer- und/oder regelbaren Dosierorgane wird das in dem Streugutbehälter bevorratete Streugut den Verteilerscheiben 1, 2 in einstellbaren Mengen zugeführt. In dem Streugutbehälter läuft ein Rührwerk (ebenfalls nicht dargestellt) um, welches je ein oder mehrere oberhalb einer jeden Auslauföffnung des Streugutbehälters angeordnete(s) Rührorgan(e) aufweist.

Der Antrieb der Verteilerscheiben 1, 2 erfolgt üblicherweise von der nicht gezeigten Zapfwelle des Traktors, welche an den Antriebsstrang der Verteilerscheiben 1, 2 der Verteilmaschine angeschlossen wird. Letzterer umfasst hierzu beispielsweise eine an ihrem freien Ende mit einer geeigneten Kopplungseinrichtung versehene Gelenkwelle (nicht gezeigt), an welche sich unter drehfester Verbindung eine zentrale Eingangswelle 7 anschließt. Die zentrale Eingangswelle 7 mündet an ihrem der Gelenkwelle abgewandten Ende in ein in dem Gehäuse 5 aufgenommenes zentrales Getriebe 8 in Form eines Eck- bzw. Winkelgetriebes, dessen eines (Kegel)ad 9 auf der Eingangswelle 7 und dessen anderes (Kegel)rad 10 auf einer Querwelle 11 sitzt, welche in dem Gehäuse 5 gelagert ist. An dem in Fig. 1 linken Ende der Querwelle 11 ist wiederum ein Eck- bzw. Winkelgetriebe 12 angeordnet, über welches die gleichfalls in dem Gehäuse 5 gelagerte Tragwelle 4 der in Fig. 1 linken Verteilerscheibe 1 angetrieben wird.

Die Tragwelle 4 der in Fig. 1 rechten Verteilerscheibe 2 ist gleichfalls in dem Gehäuse 5 gelagert und steht über ein weiteres, z.B. dem Eck- bzw. Winkelgetriebe 12 entsprechendes Eck- bzw. Winkelgetriebe 13 mit einem ebenfalls in dem Gehäuse 5 gelagerten Wellenstück 11a in Drehverbindung, welches koaxial zu der Querwelle 11 angeordnet ist. In der Praxis liegt die Abtriebsdrehzahl der Zapfwelle von Traktoren üblicherweise im Bereich von etwa 540 U/min. Das zentrale Getriebe 8 und/oder das in Fig. 1 linke Eck- bzw. Winkelgetriebe 12 sorgen dann beispielsweise für eine Übersetzung in Richtung einer demgegenüber höheren Drehzahl von z.B. bis zu 2:1.

Während die in Fig. 1 linke Verteilescheibe 1 demnach über das zentrale Getriebe 8 und das Eck- bzw. Winkelgetriebe 12 in einem stets gleichen Übersetzungsverhältnis in Bezug auf die Eingangswelle 7 angetrieben ist, lässt sich die Drehzahl der in Fig. 1 rechten Verteilerscheibe 2 in variabler Weise verändern, wobei sie im vorliegenden Fall zwischen einer Drehzahl, welcher der in Fig. 1 linken Verteilerscheibe 1 entspricht, und einer demgegenüber in variabler Weise reduzierbaren Drehzahl rotiert werden kann, um beispielsweise für ein Grenz- bzw. Rand- oder auch ein Keilstreuen zu sorgen. Zu diesem Zweck ist in dem Gehäuse 5, in welchem die Querwelle 11 gelagert ist und welches ferner sowohl das zentrale Getriebe 8 als auch die beiden Eck- bzw. Winkelgetriebe 12, 13 aufnimmt, ein stromab des zentralen Getriebes 8 - bzw. genauer: zwischen dem stromab des zentralen Getriebes 8 gelegenen Abschnittes der Querwelle 11 und dem sich hierzu koaxial erstreckenden Wellenstück 11a, welches in das Eck- bzw. Winkelgetriebe 13 der in Fig. 1 rechten Verteilerscheibe 2 mündet - angeordnetes Untersetzungsgetriebe 100 mit variabler Abtriebsdrehzahl vorgesehen. Wie weiter unten unter Bezugnahme auf die Fig. 2 bis 7 im Einzelnen erläutert, handelt es sich bei dem Untersetzungsgetriebe 100 um ein Koaxialgetriebe mit rein mechanischer Drehmomentübertragung, dessen Abtriebsdrehzahl mittels eines aktuatorischen Stellgliedes 200, 400 praktisch stufenlos zwischen einer Normalstellung, in welcher die Eingangsdrehzahl der Querwelle 11 der Abtriebsdrehzahl des Wellenstückes 11a entspricht, und einer mehr oder minder beliebigen Untersetzungsstellung, in welcher die Eingangsdrehzahl der Querwelle 11 ungleich - hier: größer - als die Abtriebsdrehzahl des Wellenstückes 11a ist, veränderbar ist. Das als mechanisches Koaxialgetriebe ausgebildete Untersetzungsgetriebe 100 ist dabei vor Schmutz und Feuchtigkeit geschützt in dem Gehäuse 5 untergebracht oder kann auch in dieses integriert sein.

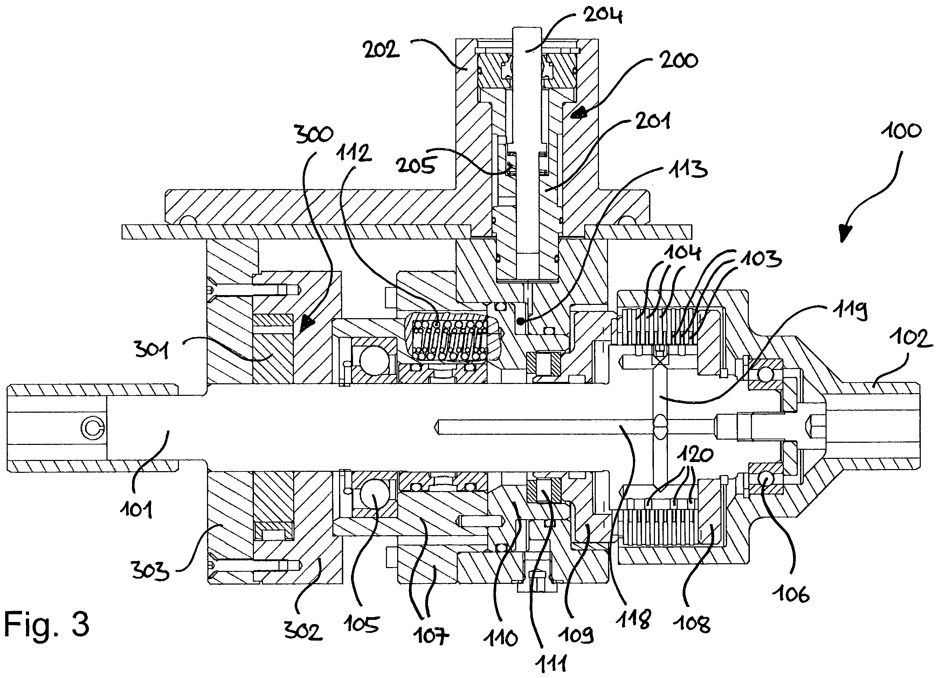

Wie insbesondere den Fig. 3, 4 und 7 zu entnehmen ist, bei welchen es sich um Längsschnitte durch das insgesamt in der Fig. 2 dargestellte Untersetzungsgetriebe 100 entlang zweier unter einem Winkel von 90° angeordneten Schnittebenen handelt, umfasst das als mechanisches Koaxialgetriebe ausgebildete Untersetzungsgetriebe 100 eine Eingangswelle 101, welche mit dem in Fig. 1 rechten, dem zentralen Getriebe 8 abgewandten Ende der Querwelle 11 verbunden ist, und eine hierzu koaxial angeordnete Abtriebswelle 102, welche mit dem in Fig. 1 linken, dem rechten Eck- bzw. Winkelgetriebe 13 abgewandten Ende des Wellenstückes 11a verbunden ist. An der Abtriebswelle 102 (oder auch an dem Wellenstück 11a oder an der Tragwelle 4 der in Fig. 1 rechten Verteilerscheibe 1) sowie vorzugsweise auch an der Eingangswelle 101 (oder auch an der Querwelle 11 oder an der Tragwelle 4 der in Fig. 1 linken Verteilerscheibe 2) kann bzw. können zeichnerisch nicht wiedergegebene Drehzahlsensoren vorgesehen sein, um die mittels des Untersetzungsgetriebes 100 veränderliche Drehzahl der in Fig. 1 rechten Verteilerscheibe 2 sowie vorzugsweise auch der durch die Zapfwelle des Traktors vorgegebene Drehzahl der in Fig. 1 linken Verteilerscheibe 1 auf einer geeigneten Anzeigeeinrichtung zu visualisieren, wobei der bzw. die Drehzahlsensor(en) insbesondere mit einer Steuer- und/oder Regeleinrichtung in Wirkverbindung stehen kann bzw. können, mittels welcher die veränderliche (Abtriebs)drehzahl der in Fig. 1 rechten Verteilerscheibe gemäß einem gewünschten Sollwert steuer- und/oder regelbar ist, indem die Steuer- und/oder Regeleinrichtung auch mit aktuatorischen Stellglied 200 des Untersetzungsgetriebes 100 wirkverbunden ist, um dessen Untersetzungsverhältnis in entsprechender Weise zu steuern und/oder zu regeln.

Wie des Weiteren insbesondere aus den Fig. 2 bis 7 hervorgeht, handelt es sich bei dem als mechanisches Koaxialgetriebe ausgebildeten Untersetzungsgetriebe 100 bei dem zeichnerisch wiedergegebenen Ausführungsbeispiel um ein Reibkupplungsgetriebe, bei welchem der der Eingangswelle 101 zugewandte Abschnitt der Abtriebswelle 102 als Hohlwelle ausgebildet ist und den Umfang des der Abtriebswelle 102 zugewandten Abschnittes der Eingangswelle 101 unter radialem Abstand von demselben umfangsseitig umgibt. An dem Außenumfang des der Abtriebswelle 102 zugewandten Abschnittes der Eingangswelle 101 sind eine Mehrzahl an etwa ringförmigen Lamellen 103 eines inneren Lamellenpaketes angeordnet, welche sich von der Eingangswelle 101 radial nach außen erstrecken. In ähnlicher Weise sind an dem Innenumfang des der Eingangswelle 101 zugewandten - hohlen - Abschnittes der Abtriebswelle 102 eine Mehrzahl an gleichfalls etwa ringförmigen Lamellen 104 eines äußeren Lamellenpaketes angeordnet, welche sich von der Abtriebswelle 102 radial nach innen erstrecken, wobei die Lamellen 103 der Eingangswelle 101 zwischen die Lamellen 104 der Abtriebswelle 102 eingreifen (und umgekehrt), so dass die Lamellen 103 der Eingangswelle 101 - in Axialrichtung betrachtet - alternierend mit den Lamellen 104 der Abtriebswelle 102 angeordnet sind. Wie nachfolgend näher erläutert, können die Lamellen 103 der Eingangswelle 101 dabei kraft- bzw. reibschlüssig entlang ihrer mit den Lamellen 104 der Abtriebswelle 102 parallel angeordneten und sich in Radialrichtung erstreckenden Flächen mit letzteren kraftschlüssig in Anlage gebracht werden, so dass die Lamellen 104 der Abtriebswelle 102 entweder gänzlich von den Lamellen 103 der Eingangswelle 101 mitgenommen werden (Normalstellung des Untersetzungsgetriebes 100; die Abtriebsdrehzahl entspricht der Eingangsdrehzahl) oder je nach axialem Andruck der Lamellen 103, 104 aneinander ein veränderbarer Schlupf entsteht (verschiedene Untersetzungsstellungen des Untersetzungsgetriebes 100; die Abtriebsdrehzahl ist kleiner als die Eingangsdrehzahl).

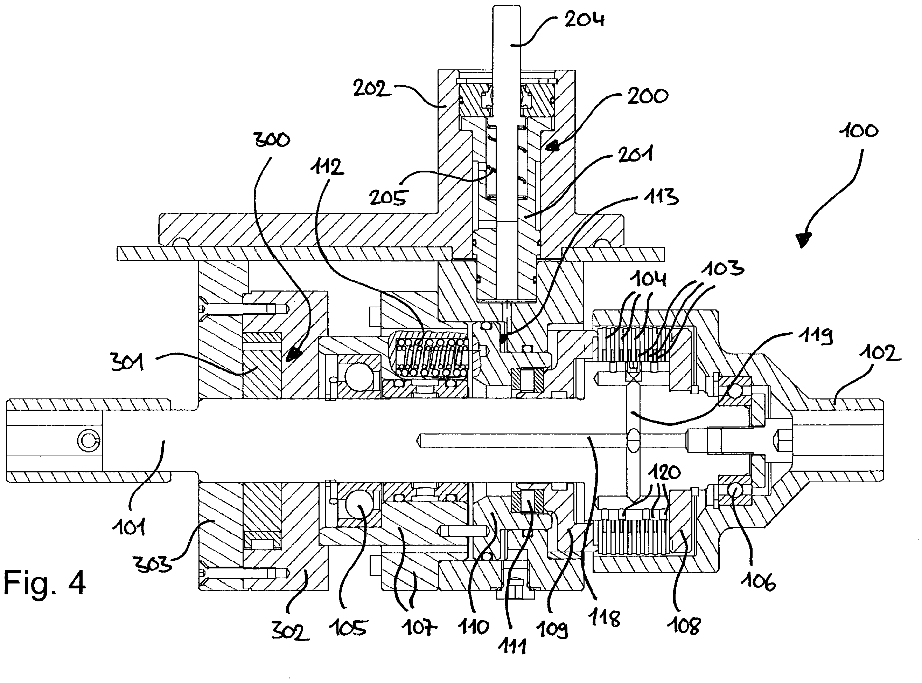

Zum Zwecke der Erzeugung dieses variablen axialen Andruckes zur Belastung der Lamellen 103 der Eingangswelle 101 gegen die Lamellen 104 der Abtriebswelle 102 ist die Eingangswelle 101, welche beim vorliegenden Ausführungsbeispiel im Übrigen mittels geeigneter Wälzlager 105, 106, wie beispielsweise Kugellager, einerseits in einem stationären Getriebegehäuse 107, andererseits im Innern des als Hohlwelle ausgebildeten, ihr zugewandten Abschnittes der Abtriebswelle 102 drehbar, aber axialfest gelagert ist, im Bereich ihres freien, der Abtriebswelle 102 zugewandten Endes mit einer Druckscheibe 108 versehen, welche axialfest auf der Eingangswelle 101 sitzt und sich in Radialrichtung von derselben fort nach außen erstreckt (vgl. insbesondere Fig. 3, 4 und 7). Unter axialem Abstand von der Druckscheibe 108 ist ferner ein in Bezug auf die Eingangswelle 101 axial verlagerbarer Andruckring 109 vorgesehen, welcher den Außenumfang der Eingangswelle 101 umgibt und unter einem größeren Abstand von deren freien, der Abtriebswelle 102 zugewandten Ende angeordnet ist als die Druckscheibe 108. Die Lamellen 103 der Eingangswelle und die hiermit kraft- bzw. reibschlüssig in Anlage bringbaren Lamellen 104 der Abtriebswelle 102 sind dabei - wiederum in Axialrichtung betrachtet - zwischen der (axialfesten) Druckscheibe 108 und dem (axial verlagerbaren) Andruckring 109 angeordnet. Der Andruckring 109 ist beim vorliegenden Ausführungsbeispiel, beispielweise mittels eines gleichfalls etwa ringförmigen Druckelementes 110, welches mittels eines Drucklagers 111 mit dem Andruckring 109 in axialem Stützkontakt steht, in Axialrichtung mechanisch gegen die Druckscheibe 108 vorbelastet, so dass die - in Axialrichtung - zwischen der Druckscheibe 108 und dem Andruckring 109 befindlichen Lamellen 103, 104 gegeneinander vorbelastet sind, um sie in Richtung der Normalstellung des Untersetzungsgetriebes, in welcher dessen Eingangsdrehzahl der Abtriebsdrehzahl entspricht, gegeneinander vorzubelasten, indem sie kraft- bzw. reibschlüssig miteinander in Anlage gebracht sind. Die mechanische Vorbelastung in Richtung der Normalstellung geschieht im vorliegenden Fall mittels Federkraft, wobei beispielsweise eine Mehrzahl an - hier z.B. fünf - Schraubenfedern 112 vorgesehen sein können, welche ausschließlich in den Längsschnitten der Fig. 3 und 4 zeichnerisch wiedergegeben sind und sich einerseits in axialen Sackbohrungen im Innern des Getriebegehäuses 107, andererseits an der dem Andruckring 109 entgegengesetzten Seite des Druckelementes 110 abstützen. Die mit den Schraubenfedern 112 versehenen axialen Sackbohrungen sind zweckmäßigerweise äquidistant um den Umfang der Eingangswelle 101 verteilt angeordnet, um für eine gleichmäßige axiale Vorbelastung des Druckelementes 110 und somit des Andruckrings 109 gegen die Lamellen 103, 104 zu sorgen, welche wiederum gegen die Druckscheibe 108 angedrückt bzw. zwischen dem Andruckring 109 und der Druckscheibe 108 komprimiert werden.

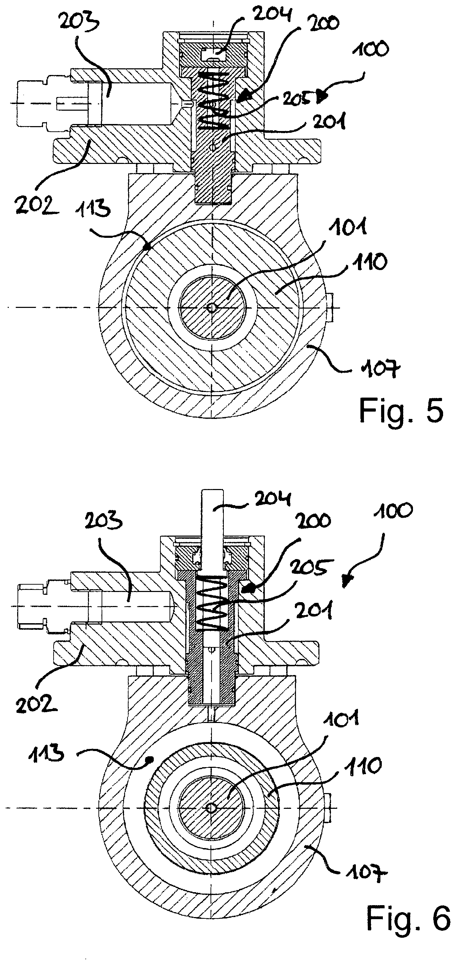

Wie insbesondere aus den Fig. 3 bis 6 hervorgeht, umfasst das aktuatorische Stellglied 200 des als Reibkupplungsgetriebe ausgebildeten mechanischen Koaxialgetriebes 100 beim vorliegenden Ausführungsbeispiel eine Kolben-/Zylindereinheit, deren Zylinder 201 in einem an dem Getriebegehäuse 107 festgelegten Stellgliedgehäuse 202 aufgenommen und mittels eines verschließbaren Einlasses 203 (siehe Fig. 5 und 6) mit einem geeigneten Druckfluid, wie beispielsweise Hydrauliköl, befüllbar ist. Der in dem Zylinder 201 axial verschiebbar geführte Kolben 204 ist im vorliegenden Fall, beispielsweise mittels einer zwischen einer - im Innern des Zylinders 201 angeordneten - umfänglichen Schulter des Kolbens 204 und einem inneren Umfangsvorsprung des Zylinders 201 wirksamen Schraubenfeder 205, in seine aus dem Zylinder 201 ausgezogene Stellung gemäß Fig. 4 vorbelastet, in welcher im Innern des Zylinders 201 folglich ein minimaler Hydraulikdruck herrscht. An seiner der Schraubenfeder 205 entgegengesetzten - außerhalb des Zylinders 201 angeordneten und in den Fig. 3 bis 6 oberen - Stirnseite steht der Kolben 204 der Kolben-/Zylindereinheit des aktuatorischen Stellgliedes 200 mit einem nicht zeichnerisch dargestellten, z.B. hydraulischen, elektrischen oder elektromagnetischen, Stellzylinder in Verbindung, mittels dessen der Kolben 204 entgegen der Federkraft Steuer- und/oder regelbar in den Zylinder 201 hineingeschoben werden kann (Fig. 3), um den Hydraulikdruck im Innern des Zylinders 201 zu erhöhen bzw. - wenn der Kolben 204 mittels des Stellzylinders aus dem Zylinder 201 ausgeschoben wird (Fig. 4) - zu verringern.

Der Zylinder 201 der Kolben-/Zylindereinheit des aktuatorischen Stellgliedes 200 mündet an seinem der Kolbenstange des Kolbens 204, an welcher dar Stellzylinder (nicht gezeigt) angreift, abgewandten Ende in einen im Innern des Getriebegehäuses 107 gebildeten Ringraum 113. Letzterer befindet sich - in Axialrichtung betrachtet - zwischen dem Druckelement 110 des Andruckrings 109 und dem diese aufnehmenden Getriebegehäuse 107 und dient zur axialen Verlagerung des Druckelementes 110 gemeinsam mit dem Andruckring 109 in Abhängigkeit des in dem Ringraum 113 herrschenden Druckes, welcher zu diesem Zweck sowohl gegen das Druckelement 110 als auch gegen das Getriebegehäuse 107 mittels geeigneter Gleitringdichtungen druckfest abgedichtet ist.

Wird folglich der Hydraulikdruck in dem als Druckkammer ausgebildeten Ringraum 113 erhöht (der Kolben 204 der Kolben-/Zylindereinheit des aktuatorischen Stellgliedes wird mittels des nicht gezeigten Stellzylinders von seiner ausgezogenen Position gemäß Fig. 4 in seine in den Zylinder 101 eingeschobene Position gemäß Fig. 3 überführt), so werden das Druckelement 110 und der Andruckring 109 entgegen der durch die Schraubenfedern 112 bewirkten mechanischen Vorbelastung von den Lamellen 103, 104 der Eingangswelle 101 bzw. der Abtriebswelle 102 fort, d.h. aus der in Fig. 4 rechten Stellung nach links entsprechend der Fig. 3, verlagert, woraufhin ein von der jeweiligen Axialstellung des Andruckrings 109 abhängiger Schlupf zwischen den Lamellen 103, 104 entsteht und die Abtriebsdrehzahl gegenüber der Eingangsdrehzahl verringert wird. Bei der in Fig. 3 gezeigten Situation stößt das Druckelement an die mit den Federn 112 versehene Innenwand des Getriebegehäuses 107 an, woraus sich eine maximale Druckentlastung der Lamellen 103, 104, folglich ein maximaler Schlupf zwischen denselben und somit eine maximale Untersetzung des Getriebes 100 ergibt.

Wird hingegen der Hydraulikdruck in dem als Druckkammer ausgebildeten Ringraum 113 reduziert (der Kolben 204 der Kolben-/Zylindereinheit des aktuatorischen Stellgliedes wird mittels des nicht gezeigten Stellzylinders von seiner eingeschobenen Position gemäß Fig. 3 in eine aus dem Zylinder 102 ausgezogene Position gemäß Fig. 4 überführt), so werden das Druckelement 110 und der Andruckring 109 aufgrund der durch die Schraubenfedern 112 bewirkten mechanischen Vorbelastung auf die Lamellen 103, 104 der Eingangswelle 101 bzw. der Abtriebswelle 102 zu, d.h. aus der in Fig. 3 linken (Anschlag)stellung nach rechts bis in die in der Fig. 4 gezeigte Normalstellung des Getriebes 100, verlagert, woraufhin der von der jeweiligen Axialstellung des Andruckrings 109 abhängige Schlupf zwischen den Lamellen 103, 104 abnimmt und die Abtriebsdrehzahl erhöht wird. In der in der Fig. 4 wiedergegebenen Normalstellung des Untersetzungsgetriebes 100 besitzt der Ringraum 113 dann ein minimales Volumen, welches im Übrigen auch praktisch gleich null sein kann, so dass das Druckelement 110 rechts gegen das Stellgliedgehäuse 202 anstößt (nicht gezeigt). Infolge der axialen Vorbelastung der Lamellen 103, 104 gegeneinander kann folglich kein Schlupf mehr vorkommen, so dass die Abtriebsdrehzahl der Eingangsdrehzahl entspricht. Soweit die Kolben-/Zylindereinheit 201, 204 des aktuatorischen Stellgliedes 200 also druckentlastet ist, befindet sich das Untersetzungsgetriebe 100 in der Normalstellung, ohne dass eine Energiezufuhr erforderlich ist. Selbstverständlich sind zwischen den in Fig. 3 und 4 dargestellten Endpositionen einerseits des Kolbens 204 der Kolben-/Zylindereinheit des Stellgliedes 200, andererseits der aus Druckelement 110 und Andruckring 109 gebildeten Einheit beliebige Zwischenpositionen möglich, welche jeweils zu einem unterschiedlichen Schlupf der Lamellen 103, 104 und folglich zu verschiedenen Untersetzungsverhältnissen des Untersetzungsgetriebes 100 führen.

Es ist auch möglich, dass die Drehzahlsensoren mit an einer jeweiligen Querwelle 11, 11a bzw. an einer jeweiligen, eine jeweilige Verteilerscheibe 1, 2 tragenden Tragwelle 4 angeordneten Positionsgebern (nicht gezeigt) zusammenwirken, so dass beispielsweise dann, wenn die Drehzahlsensor(en) eine ungünstige Relativposition der einen in Bezug auf die andere Verteilerscheibe 1, 2 detektiert haben (z.B. wenn es infolge einer bestimmten Relativanordnung der Wurfschaufeln 3 der Verteilerscheiben 1, 2 zu Düngerkollisionen der von den Verteilerscheiben 1, 2 jeweils abgeworfenen Streufächern kommt), der Hydraulikdruck in dem als Druckkammer ausgebildeten Ringraum 113 kurzzeitig verändert, d.h. erhöht oder verringert, wird, wodurch es zu einer kurzzeitigen Drehzahländerung der einen Verteilerscheibe 2 und folglich zu einer anderen Relativposition deren Wurfflügel 3 in Bezug auf jene der anderen Verteilerscheibe 1 kommt.

Um für einen sehr reibungsarmen und folglich verschleißunempfindlichen Betrieb des Untersetzungsgetriebes 100 sowie auch für eine einwandfreie Energieabführung der üblicherweise als Wärme anfallenden Verlustleistung im Falle der (beliebigen) Untersetzungsstellungen zu sorgen, bei welchen zwischen den Lamellen 203, 204 der Eingangs- 101 und der Abtriebswelle 102 ein Schlupf auftritt, ist das als Reibkupplungsgetriebe ausgestaltete koaxiale Untersetzungsgetriebe 100 ferner mit einer Pumpe 300 ausgestattet, welche im vorliegenden Fall als Kreisel- oder insbesondere als Drehschieberpumpe ausgebildet sein kann und ein koaxial mit der Eingangs- 101 und mit der Abtriebswelle 102 rotierendes Pumpenrad 301 aufweist (vgl. Fig. 2 sowie insbesondere Fig. 3, 4 und 7). Das Pumpenrad 301 ist in einem Pumpengehäuse 302 drehbar gelagert, welches an der eingangsseitigen Stirnseite das Getriebegehäuse 107 befestigt ist und letzteres eingangsseitig verschließt. Das Pumpengehäuse 302 ist seinerseits an seiner dem Getriebegehäuse 107 abgewandten (in Fig. 3, 4 und 7 linken) Seite mittels eines Gehäusedeckels 303 verschlossen, welcher z.B. mit dem Pumpengehäuse 302 verschraubt ist. Das Pumpenrad 301 ist dabei antriebslos ausgebildet und wird lediglich von der Eingangswelle 101 mitgenommen, welche zu diesem Zweck beispielsweise ein (nicht zeichnerisch dargestelltes) Außenprofil besitzt, welches mit einem (ebenfalls nicht zeichnerisch dargestellten) Innenprofil des Pumpenrades 301 drehfest, aber axial verschieblich, um die Pumpe 300 in einfacher Weise von dem Getriebegehäuse 107 abnehmen zu können, im Eingriff steht. Alternativ sind selbstverständlich auch beliebige andere drehfeste Verbindungen zwischen dem Pumpenrad 301 und der Eingangswelle 101 denkbar, wie aus dem Stand der Technik bekannte Wellen-/Nabenverbindungen, Passfederverbindungen und dergleichen.

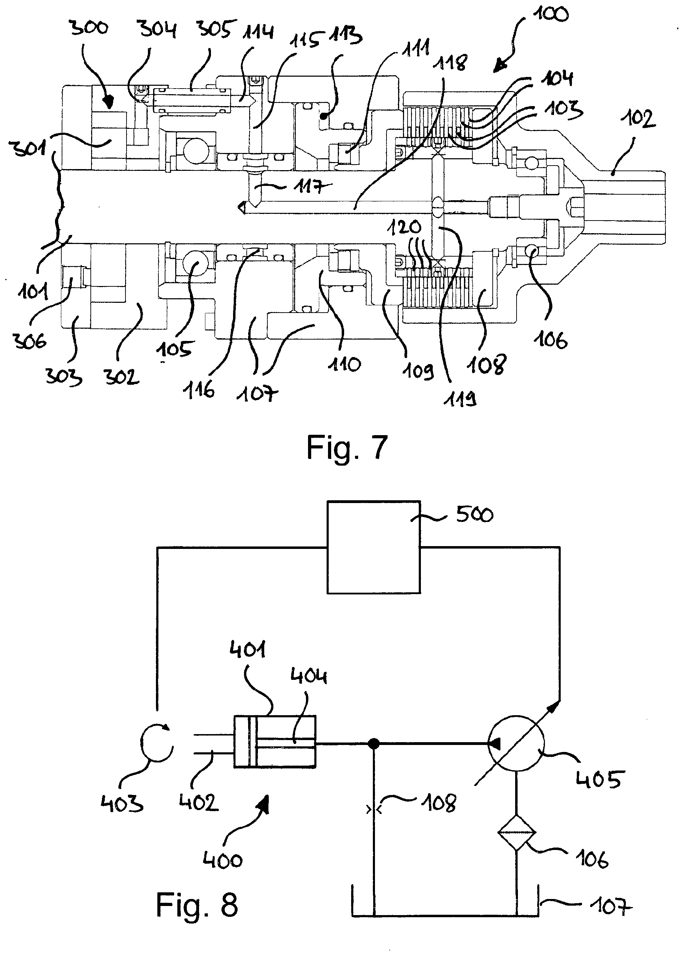

Wie insbesondere aus der Fig. 7 ersichtlich, steht ein im Bereich des dem Getriebegehäuse 107 zugewandten Außenumfangs des Pumpenrades 301 angeordneter druckseitiger Anschluss 304 der Pumpe 300 mit einem Fluidkanal in Verbindung, welcher an den kraftschlüssig miteinander in Anlage bringbaren Lamellen 103, 104 der Eingangswelle 101 und der Abtriebswelle 102 mündet. Der Fluidkanal umfasst beim vorliegenden Ausführungsbeispiel ein einerseits in den druckseitigen Anschluss 304 des Pumpengehäuses 302, andererseits in einen Fluidanschluss 114 des Getriebegehäuses 107 druckdicht einsteckbares Verbindungsstück 305, welches sich in Axialrichtung der Eingangswelle 101, aber exzentrisch hierzu erstreckt und folglich beim Aufsetzen des Pumpengehäuses 302 auf das Getriebegehäuse 107 in einfacher Weise zwischen den Anschlüssen 304, 114 angeordnet werden kann. Der Fluidanschluss 114 des Getriebegehäuses 107 mündet in einen das Getriebegehäuse 107 radial durchsetzenden Verbindungskanal 115, welcher über eine Drehdurchführung 116 mit einem radialen Stichkanal 117 der Eingangswelle 101 in Verbindung steht. Der radiale Stichkanal 117 der Eingangswelle 101 mündet wiederum in einen axialen, sich vorzugsweise koaxial zur Drehachse der Eingangswelle 101 erstreckenden Kanal 118, welcher an seinem den Lamellen 104, 104 zugewandten Ende mit einem oder vorzugsweise mit mehreren, z.B. vier, Radialkanälen 119 in Verbindung steht. Die Radialkanäle 119 münden an ihrem dem axialen Kanal 118 abgewandten (äußeren) Ende an den mit den Lamellen 103 versehenen Außenumfang der Eingangswelle 101, wobei sie sich vorzugsweise in mehrere, in Axialrichtung nebeneinander angeordnete Auslässe 120 verzweigen, um das mittels der Pumpe 300 geförderte Fluid, bei welchem es sich beispielsweise um Öl handeln kann, direkt in die Zwischenräume zwischen jeweils benachbarten Lamellen 103 der Eingangswelle 101, in welche die Lamellen 104 der Abtriebswelle 102 von außen eingreifen, zu verteilen. Das auf diese Weise zwischen die Lamellen 103, 104 der Eingangs- 101 und der Abtriebswelle 102 hinein gepumpte Fluid vermag die Lamellenpakete beispielsweise mittels eines zwischen dem Getriebegehäuse 107 und dem hohlen, der Eingangswelle 101 zugewandten Ende der Abtriebswelle 102 gebildeten Ringspaltes wieder zu verlassen, woraufhin es z.B. über einen saugseitigen Anschluss 306 der Pumpe 300 (vgl. Fig. 3, 4 und 7) wieder angesaugt werden kann, welcher beim vorliegenden Ausführungsbeispiel den Deckel 303 des Pumpengehäuses 302 axial durchsetzt und an die Saugseite des Pumpenrades 301 führt. Wie der Fig. 2 zu entnehmen ist, kann an den saugseitigen Anschluss 306 der Pumpe 300 zweckmäßigerweise ein Rohrkrümmer 307 angeschlossen sein, welcher radial nach unten und außen führt, um aus dem bodenseitigen Ölschlamm zuverlässig Öl anzusaugen und über den Fluidkanal 305, 115, 116, 117, 118, 119, 120 wieder den Lamellenpaketen zuzuführen. Hieraus ergibt sich in zuverlässiger Weise eine stetige Schmierung der Lamellenpakete während des Betriebs, wobei insbesondere auch im Falle von Schlupf infolge Reibung erzeugte Wärme sicher abgeführt werden kann.

In der Fig. 8 ist eine zu dem aktuatorischen Stellglied 200 des Reibkupplungsgetriebes 100 gemäß Fig. 2 bis 7 alternative Ausführungsform eines Stellgliedes 400 in Form eines schematischen Schaltbildes wiedergegeben. Das Stellglied 400 weist wiederum eine, z.B. hydraulische, Kolben-/Zylindereinheit auf, deren Zylinder 401 ein Hydraulikfluid aufnimmt und über eine Druckleitung 402 mit dem Ringraum 113 (vgl. Fig. 3 bis 7) des Reibkupplungsgetriebes 100 in fluidischer Verbindung steht, um dessen mit dem Pfeil 403 angedeutetes Untersetzungsverhältnis in entsprechender Weise zu verändern, wie dies bei der oben erläuterten Ausführungsform gemäß Fig. 2 bis 7 der Fall ist. In Abweichung hierzu ist der Kolben 404 der Kolben-/Zylindereinheit indes nicht mittels eines (elektrischen) Stellzylinders betätigbar, sondern mittels einer steuer- und/oder regelbaren Pumpe 405, welche mit Zylinder 401 der Kolben-/Zylindereinheit, und zwar an der der Druckleitung 402 entgegengesetzten Seite des Kolbens 404, in fluidischer Verbindung steht, um den Kolben 404 relativ zu dem Zylinder 401 zu verlagern und dabei über die Druckleitung 402 den Druck in dem Ringraum 113 des Reibkupplungsgetriebes 100 (vgl. Fig. 2 bis 7) zu verändern, so dass die Lamellen 103, 104 infolge axialer Verlagerung von Andruckring 109 und Druckelement 110 komprimiert bzw. dekomprimiert werden und das Untersetzungsverhältnis aufgrund unterschiedlichen Schlupfes der Lamellen 103, 104 variiert wird. Die Pumpe 405 wird hierbei beispielsweise unter Zwischenanordnung eines Filters 106 von einem Fluidreservoir 107 gespeist. Überdies ist im vorliegenden Fall ein, beispielsweise nach Art eines Blendenventils bzw. einer Messblende 108 ausgestalteter, Drucksensor vorgesehen, welcher ebenso wie die Pumpe 405 mit einer Steuer- und/oder Regeleinrichtung 500 in Wirkverbindung steht, um das Untersetzungsverhältnis des Getriebes 100 gemäß einem gewünschten Sollwert zu steuern und/oder zu regeln. Die Steuer- und/oder Regeleinrichtung 500 kann ferner, wie oben erwähnt, mit einem oder mehreren Drehzahlsensor(en) (nicht gezeigt) zur Erfassung der Abtriebsdrehzahl des Getriebes 100 verbunden sein und im Übrigen auch zur Steuerung und/oder Regelung der übrigen Einstellparameter der Verteilmaschine, wie Aufgabepunkt, Dosiermenge und dergleichen, dienen.

Ferner ist es grundsätzlich z.B. auch möglich, dass die Pumpe 405 über die Druckleitung 402 direkt mit dem Ringraum 113 des Reibkupplungsgetriebes 100 (vgl. Fig. 2 bis 7) kommuniziert, so dass die Kolben-/Zylindereinheit 401, 404 entbehrlich wird. Überdies sind selbstverständlich beliebige andere Stellglieder für das Reibkupplungsgetriebe 100 denkbar.

## Patentansprüche

1. Verteilmaschine mit wenigstens zwei Verteilerscheiben (1, 2), welche von einem an eine Zapfwelle einer Zugmaschine oder eines Traktors anschließbaren Antriebsstrang (4, 7, 8, 9, 10, 11, 11a, 12, 13) drehangetrieben sind, wobei der Antriebsstrang (4, 7, 8, 9, 10, 11, 11a, 12, 13) eine zentrale Eingangswelle (7) umfasst, welche über ein zentrales Getriebe (8) wenigstens eine, zum Antrieb einer jeweiligen Verteilerscheibe (1, 2) dienende Querwelle (11) antreibt, wobei wenigstens eine (2) der Verteilerscheiben (1, 2) mittels eines stromab des zentralen Getriebes (8) angeordneten Untersetzungsgetriebes (100) mit variabler Abtriebsdrehzahl mit einer gegenüber einer anderen (1) der Verteilerscheiben (1, 2) verschiedenen Drehzahl rotierbar ist, wobei das Untersetzungsgetriebe (100) zur Veränderung seiner Abtriebsdrehzahl ein Stellglied (200, 400) aufweist und als mechanisches Koaxialgetriebe ausgebildet ist, dessen Eingangswelle (101) mit der Querwelle (11) verbunden ist und dessen Abtriebswelle (102) koaxial zu der Querwelle (11) angeordnet ist, **dadurch gekennzeichnet, dass** das Koaxialgetriebe als Reibkupplungsgetriebe ausgebildet ist, wobei das Untersetzungsverhältnis des Reibkupplungsgetriebes mittels des Stellgliedes (200, 400) zwischen einer Normalstellung, in welcher die Eingangsdrehzahl der Eingangswelle (101) im Wesentlichen der Ausgangsdrehzahl der Abtriebswelle (102) entspricht, und wenigstens einer Untersetzungsstellung, in welcher die Eingangsdrehzahl der Eingangswelle (101) ungleich der Ausgangsdrehzahl der Abtriebswelle (102) ist, veränderbar ist.

2. Verteilmaschine nach Anspruch 1, **dadurch gekennzeichnet, dass** das Reibkupplungsgetriebe in einem die Querwelle (11) aufnehmenden Gehäuse (5) angeordnet oder in ein solches integriert ist, wobei das Stellglied (200, 400) das Gehäuse (5) insbesondere im Wesentlichen radial durchsetzt.

3. Verteilmaschine nach Anspruch 1 oder 2, **dadurch gekennzeichnet, dass** das Reibkupplungsgetriebe eine Mehrzahl an Untersetzungsstellungen mit verschiedenen Ausgangsdrehzahlen aufweist, wobei es mittels des Stellgliedes (200, 400) insbesondere im Wesentlichen stufenlos zwischen den mehreren Untersetzungsstellungen verstellbar ist.

4. Verteilmaschine nach Anspruch 3, **dadurch gekennzeichnet, dass**
- abtriebseitig des Reibkupplungsgetriebes, insbesondere an dessen Abtriebswelle (102),
und gegebenenfalls
- eingangsseitig des Reibkupplungsgetriebes, insbesondere an dessen Eingangswelle (101),
ein Drehzahlsensor angeordnet ist, wobei der bzw. die Drehzahlsensor(en) insbesondere mit einer Steuer- und/oder Regeleinrichtung in Verbindung steht bzw. stehen, mittels welcher die Abtriebsdrehzahl gemäß einem Sollwert steuerbar und/oder regelbar ist.

5. Verteilmaschine nach einem der Ansprüche 1 bis 4, **dadurch gekennzeichnet, dass** sowohl die Eingangswelle (101) des Reibkupplungsgetriebes als auch dessen Abtriebswelle (102) jeweils wenigstens eine Lamelle (103, 104), insbesondere eine Mehrzahl an Lamellen (103, 104), aufweist, welche kraftschlüssig miteinander in Anlage bringbar sind.

6. Verteilmaschine nach Anspruch 5, **dadurch gekennzeichnet, dass** die Lamellen (103, 104) der Eingangswelle (101) und der Abtriebswelle (102), insbesondere mittels eines in Axialrichtung verlagerbaren Andruckrings (109), mit variablem Andruck gegeneinander belastbar sind, um den zwischen der wenigstens einen Lamelle (103) der Eingangswelle (101) und der wenigstens einen Lamelle (104) der Abtriebswelle (102) während des Betriebs auftretenden Schlupf und folglich die Abtriebsdrehzahl zu verändern.

7. Verteilmaschine nach einem der Ansprüche 1 bis 6, **dadurch gekennzeichnet, dass** das Stellglied (200, 400) des Reibkupplungsgetriebes ein aktuatorisches Stellglied umfasst.

8. Verteilmaschine nach Anspruch 7, **dadurch gekennzeichnet, dass** das aktuatorische Stellglied (200, 400) des Reibkupplungsgetriebes eine hydraulische, pneumatische oder hydropneumatische Kolben-/Zylindereinheit (201, 204; 401, 404) aufweist.

9. Verteilmaschine nach den Ansprüchen 6 bis 8, **dadurch gekennzeichnet, dass** ein Zylinder (201; 401) der Kolben-/Zylindereinheit des aktuatorischen Stellgliedes (200; 400) mit einem in einem Gehäuse (107) des Reibkupplungsgetriebes angeordneten Ringraum (113) in Verbindung steht, welcher sich in Axialrichtung an den Andruckring (109) anschließt und zur axialen Verlagerung desselben in Abhängigkeit des in dem Ringraum (113) herrschenden Druckes dient.

10. Verteilmaschine nach einem der Ansprüche 5 bis 9, **dadurch gekennzeichnet, dass** die Lamellen (103, 104) der Eingangswelle (101) und der Abtriebswelle (102) mechanisch, insbesondere mittels Federkraft,
- gegeneinander vorbelastet sind, um sie kraftschlüssig miteinander in Anlage zu bringen; oder
- voneinander fort vorbelastet sind, um sie außer Anlage miteinander zu bringen,
wobei die Lamellen (103, 104) der Eingangswelle (101) und der Abtriebswelle (102) mittels des Stellgliedes (200; 400) entgegen der mechanischen Vorbelastung
- voneinander fort belastbar sind, um den Schlupf zu vergrößern; oder
- gegeneinander vorbelastbar sind, um den Schlupf zu verringern.

11. Verteilmaschine nach einem der Ansprüche 1 bis 10, **dadurch gekennzeichnet, dass** während des Normalbetriebs ein schlupffreier Kontakt der Eingangswelle (101) des Reibkupplungsgetriebes mit dessen Abtriebswelle (102) gebildet ist, so dass die Eingangsdrehzahl der Abtriebsdrehzahl entspricht.

12. Verteilmaschine nach Anspruch 8 oder 9, **dadurch gekennzeichnet, dass** das aktuatorische Stellglied (200; 400) ferner
- einen, insbesondere hydraulischen, elektrischen oder elektromagnetischen, Stellzylinder oder einen Piezomotor umfasst, welcher mit einem Kolben (204) der hydraulischen, pneumatischen oder hydropneumatischen Kolben-/Zylindereinheit (201, 401) in mechanischer Verbindung steht, um deren Kolben (204) zu betätigen; oder
- eine steuer- und/oder regelbare Pumpe (405) umfasst, welche mit einem Zylinder (401) der hydraulischen, pneumatischen oder hydropneumatischen Kolben-/Zylindereinheit (401, 404) in fluidischer Verbindung steht, um deren Kolben (404) zu betätigen.

13. Verteilmaschine nach einem der Ansprüche 1 bis 12, **dadurch gekennzeichnet, dass** das Reibkupplungsgetriebe ferner eine Pumpe (300), insbesondere in Form einer Drehschieber- oder Kreiselpumpe, aufweist, deren druckseitiger Anschluss (304) mit einem Fluidkanal (305, 115, 116, 117, 118, 119, 120) in Verbindung steht, welcher an den kraftschlüssig miteinander in Anlage bringbaren Lamellen (103, 104) der Eingangswelle (101) und der Abtriebswelle (102) mündet.

14. Verteilmaschine nach Anspruch 13, **dadurch gekennzeichnet, dass** ein Pumpenrad (301) der Pumpe (300) drehfest mit der Eingangswelle (101) verbunden ist, während ein Pumpengehäuse (302) drehfest mit einem Getriebegehäuse (107) oder mit einem die Querwelle (11, 11a) des Antriebsstrangs (4, 7, 8, 9, 10, 11, 11, 11a, 12, 13) der Verteilerscheiben (1, 2) umgebenden Gehäuse (5) verbunden ist, so dass ein eigener Antrieb der Pumpe (300) entbehrlich ist.

15. Verteilmaschine nach Anspruch 13 oder 14, **dadurch gekennzeichnet, dass** die Pumpe (300) auf eine Stirnseite des Reibkupplungsgetriebes, insbesondere auf dessen eingangsseitige Stirnseite, aufsetzbar ist.

## Claims

1. Distributor with at least two distributor disks (1, 2), which are rotatably driven by a drive train (4, 7, 8, 9, 10, 11, 11a, 12, 13), which can be connected to a power take-off shaft of a traction unit or of a tractor, wherein the drive train (4, 7, 8, 9, 10, 11, 11a, 12, 13) comprises a central input shaft (7), which drives via a central gear (8) at least one cross shaft (11) used to drive a respective distributor disk (1, 2), wherein at least one reducing gear (100) of variable output speed, arranged downstream of the central gear (8), can be rotated at a speed different from that of another (1) of the distributor disks (1, 2), wherein the reducing gear (100) has an adjusting element (200, 400) to change its output speed and is configured as a mechanical coaxial transmission, whose input shaft (101) is connected to the cross shaft (11) and whose driven shaft (102) is arranged coaxially to the cross shaft (11), **characterized in that** the coaxial transmission (100) is configured as a friction clutch transmission, wherein the speed reduction ratio of the friction clutch transmission can be changed between a normal position, in which the input speed of the input shaft (101) corresponds essentially to the output speed of the driven shaft (102), and at least one speed reduction position, in which the input speed of the input shaft (101) is not equal to the output speed of the driven shaft (102).

2. Distributor in accordance with claim 1, **characterized in that** the friction clutch transmission is arranged in a housing (5) accommodating the cross shaft (11) or is integrated in such a housing, wherein the adjusting element (200, 400) passes through the housing (5) especially essentially radially.

3. Distributor in accordance with claim 1 or 2, **characterized in that** the friction clutch transmission has a plurality of speed reduction positions with different output speeds, and it is adjustable by means of the adjusting element (200, 400) between a plurality of speed reduction positions essentially continuously.

4. Distributor in accordance with claim 3, **characterized in that** a speed sensor is arranged
- on the output side of the friction clutch transmission, especially at the driven shaft (102) thereof,
and optionally
- on the input side of the friction clutch transmission, especially at the input shaft (101) thereof,
wherein the speed sensor(s) is/are in connection with a control and/or regulating unit, by means of which the output speed can be controlled and/or regulated according to a set point.

5. Distributor in accordance with one of the claims 1 through 4, **characterized in that** both the input shaft (101) of the friction clutch transmission and the driven shaft (102) thereof have each at least one plate (103, 104), especially a plurality of plates (103, 104), which can be brought into contact with one another in a non-positive manner.

6. Distributor in accordance with claim 5, **characterized in that** the plates (103, 104) of the input shaft (101) and of the driven shaft (102) can be stressed, especially by means of a pressing ring (109) displaceable in the axial direction, with variable pressure, in order to change the slip occurring during the operation between the at least one plate (103) of the input shaft (101) and the at least one plate (104) of the driven shaft (102) and consequently the output speed.

7. Distributor in accordance with one of the claims 5 through 7, **characterized in that** the adjusting element (200, 400) of the friction clutch transmission comprises an actuator-type adjusting element.

8. Distributor in accordance with claim 7, **characterized in that** the adjusting element (100, 400) of the friction clutch transmission has a hydraulic, pneumatic or hydropneumatic piston-and-cylinder unit (201, 204; 401, 404).

9. Distributor in accordance with one of the claims 6 through 8, **characterized in that** a cylinder (201; 401) of the piston-and-cylinder unit of the actuator-type adjusting element (200; 400) is in connection with an annular space (113), which is arranged in a housing (107) of the friction clutch transmission and which adjoins the pressing ring (109) in the axial direction and is used to axially displace it as a function of the pressure prevailing in the annular space (113).

10. Distributor in accordance with one of the claims 5 through 9, **characterized in that** the plates (103, 104) of the input shaft (101) and of the driven shaft (102)
- are prestressed towards one another mechanically, especially by means of spring force, in order to bring them into contact in a non-positive manner; or
- are prestressed away from one another mechanically, especially by means of spring force, in order to bring them out of contact,
wherein the plates (103, 104) of the input shaft (101) and of the driven shaft (102)
- can be prestressed away from one another by means of the adjusting element (200; 400) against the mechanical prestress in order to increase the slip; or
- can be prestressed towards one another by means of the adjusting element (200; 400) against the mechanical prestress in order to reduce the slip.

11. Distributor in accordance with one of the claims 1 through 10, **characterized in that** a slip-free contact of the input shaft (101) of the friction clutch transmission with the driven shaft (102) is formed during the normal operation, so that the input speed corresponds to the output speed.

12. Distributor in accordance with claim 8 or 9, **characterized in that** the actuator-type adjusting element (200; 400) further comprises
- an especially hydraulic, electrical or electromagnetic adjusting cylinder or a piezo motor, which is in mechanical connection with a piston (204) of the hydraulic, pneumatic or hydropneumatic piston-and-cylinder unit (201, 401) in order to actuate the piston (204) thereof, or
- a controllable and/or regulatable pump (405), which is in fluidic connection with a cylinder (401) of the hydraulic, pneumatic or hydropneumatic piston-and-cylinder unit (401, 404) in order to actuate the piston (404) thereof.

13. Distributor in accordance with one of the claims 1 through 12, **characterized in that** the friction clutch transmission further has a pump (300), especially in the form of a vane-type rotary pump or centrifugal pump, whose delivery-side port (304) is in connection with a fluid duct (305, 115, 116, 117, 118, 119, 120), which opens at the plates (103, 104) of the input shaft (101) and of the driven shaft (102), which said plates can be brought into contact with one another in a non-positive manner.

14. Distributor in accordance with claim 13, **characterized in that** a pump wheel (301) of the pump (300) is non-rotatably connected to the input shaft (101), wherein a pump housing (302) is non-rotatably connected to a gearbox (107) or to a housing (5) surrounding the cross shaft (11, 11a) of the drive train (4, 7, 8, 9, 10, 11, 11a, 12, 13) of the distributor disks (1, 2), a drive of its own thus becomes unnecessary for the pump (300).

15. Distributor in accordance with claim 13 or 14, **characterized in that** the pump (300) can be attached to an end face of the friction clutch transmission, especially on the input-side end face thereof.

## Revendications

1. Machine d'épandage avec au moins deux disques d'épandage (1, 2) qui sont entraînés en rotation par une chaîne cinématique (4, 7, 8, 9, 10, 11, 11a, 12, 13) pouvant être reliée à un arbre de prise de force d'un mototracteur ou d'un tracteur, la chaîne cinématique (4, 7, 8, 9, 10, 11, 11a, 12, 13) comprenant un arbre d'entrée central (7) entraînant, via une boîte de vitesses centrale (8), au moins un arbre transversal (11) servant à l'entraînement d'un disque d'épandage (1, 2) respectif, au moins un (2) des disques d'épandage (1, 2) pouvant pivoter à l'aide d'un réducteur de vitesse (100) disposé en aval de la boîte de vitesses centrale (8), avec une vitesse de rotation variable en sortie, avec une vitesse de rotation différente par rapport à un autre (1) des disques d'épandage (1, 2), le réducteur de vitesse (100) comportant un organe de réglage (200, 400) pour changer sa vitesse de rotation en sortie et étant réalisé sous la forme d'une boîte de vitesses coaxiale mécanique dont l'arbre d'entrée (101) est relié à l'arbre transversal (11) et dont l'arbre de sortie (102) est disposé dans le plan coaxial par rapport à l'arbre transversal (11), **caractérisée en ce que** la boîte de vitesses coaxiale est réalisée sous la forme d'un embrayage à friction, le rapport de réduction de l'embrayage à friction pouvant varier à l'aide de l'organe de réglage (200, 400), entre une position normale dans laquelle la vitesse de rotation en entrée de l'arbre d'entrée (101) correspond pour l'essentiel à la vitesse de rotation en sortie de l'arbre de sortie (102) et au moins une position de réduction dans laquelle la vitesse de rotation en entrée de l'arbre d'entrée (101) n'est pas égale à la vitesse de rotation en sortie de l'arbre de sortie (102).

2. Machine d'épandage selon la revendication 1, **caractérisée en ce que** l'embrayage à friction est disposé dans un carter (5) logeant l'arbre transversal (11) ou est intégré dans un tel carter, l'organe de réglage (200, 400) traversant le carter (5) notamment pour l'essentiel dans le plan radial.

3. Machine d'épandage selon la revendication 1 ou 2, **caractérisée en ce que** l'embrayage à friction comporte une pluralité de positions de réduction avec différentes vitesses de rotation en sortie, ledit embrayage pouvant être réglé à l'aide de l'organe de réglage (200, 400), notamment pour l'essentiel en continu, entre les multiples positions de réduction.

4. Machine d'épandage selon la revendication 3, **caractérisée en ce qu'**un capteur de vitesse de rotation est disposé :
- sur le côté de sortie de l'embrayage à friction, notamment au niveau de son arbre de sortie (102) et le cas échéant
- sur le côté d'entrée de l'embrayage à friction, notamment au niveau de son arbre d'entrée (101)
le et/ou les capteurs de vitesse de rotation étant notamment relié et/ou reliés au dispositif de commande et/ou de réglage à l'aide duquel la vitesse de rotation en sortie peut être commandée et/ou réglée en fonction d'une valeur théorique.

5. Machine d'épandage selon l'une quelconque des revendications 1 à 4, **caractérisée en ce que** tant l'arbre d'entrée (101) de l'embrayage à friction que de son arbre de sortie (102) comportent respectivement au moins une lamelle (103, 104), notamment une pluralité de lamelles (103, 104) pouvant être amenées en contact les unes avec les autres par complémentarité de forces.

6. Machine d'épandage selon la revendication 5, **caractérisée en ce que** les lamelles (103, 104) de l'arbre d'entrée (101) et de l'arbre de sortie (102) peuvent être sollicitées avec une contre-pression variable les unes contre les autres, notamment à l'aide d'une bague de contre-pression (109), pour faire varier le patinage survenant en fonctionnement et par conséquent la vitesse de rotation en sortie entre l'au moins une lamelle (103) de l'arbre d'entrée (101) et l'au moins une lamelle (104) de l'arbre de sortie (102).

7. Machine d'épandage selon l'une quelconque des revendications 1 à 6, **caractérisée en ce que** l'organe de réglage (200, 400) de l'embrayage à friction comprend un organe de réglage par actionneur.

8. Machine d'épandage selon la revendication 7, **caractérisée en ce que** l'organe de réglage (200, 400) par actionneur de l'embrayage à friction comporte une unité piston-cylindre (201, 204 ; 401, 404) hydraulique, pneumatique ou hydropneumatique.

9. Machine d'épandage selon les revendications 6 à 8, **caractérisée en ce qu'**un cylindre (201 ; 401) de l'unité piston-cylindre de l'organe de réglage (200; 400) par actionneur est relié à un espace annulaire (113) disposé dans un carter (107) de l'embrayage à friction raccordé à la bague de compression (109) dans la direction axiale et servant au déplacement axial de celui-ci en fonction de la pression régnant dans l'espace annulaire (113).

10. Machine d'épandage selon l'une quelconque des revendications 5 à 9, **caractérisée en ce que** les lamelles (103, 104) de l'arbre d'entrée (101) et de l'arbre de sortie (102) sont présollicitées de façon mécanique, notamment grâce à une force de ressort, à l'encontre de la présollicitation mécanique, à l'aide de l'organe de réglage (200 ; 400) :
- les unes contre les autres pour les mettre en butée par complémentarité de forces ; ou
- de façon à être écartées les unes des autres, pour les amener hors de butée ;
les lamelles (103, 104) de l'arbre d'entrée (101) et de l'arbre de sortie (102)
- pouvant être sollicitées de façon à être écartées les unes des autres pour augmenter le patinage ; ou
- pouvant être présollicitées les unes contre les autres pour réduire le patinage.

11. Machine d'épandage selon l'une quelconque des revendications 1 à 10, **caractérisée en ce qu'**en fonctionnement, un contact sans patinage de l'arbre d'entrée (101) de l'embrayage à friction est formé avec son arbre de sortie (102), de sorte que la vitesse de rotation en entrée corresponde à la vitesse de rotation en sortie.

12. Machine d'épandage selon la revendication 8 ou 9, **caractérisée en ce que** l'organe de réglage (200 ; 400) par actionneur comprend en outre :
- un cylindre de réglage, notamment hydraulique, électrique ou électromagnétique, ou un piézomoteur en liaison mécanique avec le piston (204) de l'unité piston-cylindre (201, 401) hydraulique, pneumatique ou hydropneumatique pour actionner son piston (204) ; ou
- une pompe commandable ou réglable (405) en liaison fluidique avec le cylindre (401) de l'unité piston-cylindre (401, 404) hydraulique, pneumatique ou hydropneumatique pour actionner son piston (404).

13. Machine d'épandage selon l'une quelconque des revendications 1 à 12, **caractérisée en ce que** l'embrayage à friction comporte en outre une pompe (300), notamment sous la forme d'une pompe à boisseau rotatif ou centrifuge dont le raccordement (304) du côté de pression est relié à un canal fluidique (305, 115, 116, 117, 118, 119, 120) débouchant au niveau des lamelles (103, 104) de l'arbre d'entrée (101) et de l'arbre de sortie (102) pouvant être amenées en butée entre elles par complémentarité de forces.

14. Machine d'épandage selon la revendication 13, **caractérisée en ce qu'**un impulseur (301) de la pompe (300) est relié solidairement en rotation à l'arbre d'entrée (101) tandis qu'un carter de pompe (302) est relié solidairement en rotation au carter de boîte de vitesses (107) ou à un carter (5) entourant l'arbre transversal (11, 11a) de la chaîne cinématique (4, 7, 8, 9, 10, 11, 11, 11a, 12, 13) des disques d'épandage (1, 2), de sorte qu'un entraînement en entrée propre de la pompe (300) soit inutile.

15. Machine d'épandage selon la revendication 13 ou 14, **caractérisée en ce que** la pompe (300) peut être placée sur un côté avant de l'embrayage à friction, notamment sur son côté avant situé du côté d'entrée.
